(19) Europäisches Patentamt
European Patent Office
Office européen des brevets

(11) **EP 4 102 492 A1**

(12) **EUROPÄISCHE PATENTANMELDUNG**

(43) Veröffentlichungstag:
**14.12.2022   Patentblatt 2022/50**

(21) Anmeldenummer: **22161241.9**

(22) Anmeldetag: **10.03.2022**

(51) Internationale Patentklassifikation (IPC):
**G09G 3/20** $^{(2006.01)}$       **G02F 1/13** $^{(2006.01)}$
**G06T 7/00** $^{(2017.01)}$       **G06T 5/00** $^{(2006.01)}$
**G06T 7/30** $^{(2017.01)}$       **G06T 7/32** $^{(2017.01)}$
**G06T 7/33** $^{(2017.01)}$       **G06T 7/73** $^{(2017.01)}$
**G06T 7/80** $^{(2017.01)}$

(52) Gemeinsame Patentklassifikation (CPC):
**G09G 3/20; G01N 21/88; G02F 1/1309;**
**G06T 7/0004; G06T 7/73;** G06T 2207/30121;
G06T 2207/30208; G06T 2207/30244;
G09G 2320/0233; G09G 2320/0285;
G09G 2320/0295; G09G 2320/0693;
G09G 2360/145

(84) Benannte Vertragsstaaten:
**AL AT BE BG CH CY CZ DE DK EE ES FI FR GB**
**GR HR HU IE IS IT LI LT LU LV MC MK MT NL NO**
**PL PT RO RS SE SI SK SM TR**
Benannte Erstreckungsstaaten:
**BA ME**
Benannte Validierungsstaaten:
**KH MA MD TN**

(30) Priorität: **07.06.2021   DE 102021205703**

(71) Anmelder: **TechnoTeam Holding GmbH**
**98693 Ilmenau (DE)**

(72) Erfinder:
• **KRÜGER, Udo**
  **99837 Werra-Suhl-Tal OT Wünschensuhl (DE)**
• **ROTSCHOLL, Ingo**
  **64289 Darmstadt (DE)**
• **POSCHMANN, Ralf**
  **99338 Plaue (DE)**

(74) Vertreter: **Liedtke & Partner Patentanwälte**
**Gerhart-Hauptmann-Straße 10/11**
**99096 Erfurt (DE)**

(54) **VERFAHREN UND VORRICHTUNG ZUR LICHTTECHNISCHEN VERMESSUNG EINES ELEKTRONISCHEN DISPLAYS SOWIE VERFAHREN ZUR ANSTEUERUNG EINES ELEKTRONISCHEN DISPLAYS**

(57)     Die Erfindung betrifft ein Verfahren zur lichttechnischen Vermessung eines Displays (10) mit in einem Displaykoordinatensystem (K) angeordneten Anzeigeelementen (11, 12). Das Display (10) wird in mindestens einer ersten Messposition (MP1) des Displays (10) gegenüber der Messkamera (2) zur Anzeige mindestens eines Testbildes (100) angesteuert und mit einer Messkamera (2) mit in einem Kamerakoordinatensystem (K') angeordneten Sensorpixeln (21) mindestens ausschnittsweise erfasst. Das Display (10) wird ferner zur Anzeige mindestens eines absoluten Positionscodes (P4) angesteuert, der zur Positionsbestimmung mindestens eines Anzeigeelements (11, 12) relativ zum Displaykoordinatensystem (K) eingerichtet ist, und währenddessen von der Messkamera (2) mindestens ausschnittsweise aufgenommen. Anhand des mindestens einen absoluten Positionscodes (P4) wird eine Koordinatentransformation zur Transformation von Koordinaten des Kamerakoordinatensystems (K') in Koordinaten des Displaykoordinatensystems (K) ermittelt. Für mindestens ein Anzeigeelement (11, 12) wird mindestens ein lichttechnischer Parameter ermittelt, indem die bei der Darstellung des mindestens einen Testbildes (100) von den Sensorpixeln (21) erfassten Messwerte mittels der Koordinatentransformation in das Displaykoordinatensystem (K) überführt werden.

Ferner betrifft die Erfindung ein Verfahren zur Ansteuerung eines Displays (10) und eine Vorrichtung zur lichttechnischen Vermessung eines Displays (10).

FIG 4

**Beschreibung**

Die Erfindung betrifft ein Verfahren zur lichttechnischen Vermessung eines elektronischen Displays gemäß dem Oberbegriff des Anspruchs 1. Ferner betrifft die Erfindung eine Vorrichtung zur lichttechnischen Vermessung eines elektronischen Displays mit einem solchen Verfahren sowie ein Verfahren zur Ansteuerung eines elektronischen Displays.

Elektrooptische Anzeigen zur pixelweisen Darstellung von Inhalten werden als Displays bezeichnet und sind in verschiedenen Herstellungstechnologien bekannt, beispielsweise als organic light emitting diode (OLED) oder als Micro - Light Emitting Diode (MicroLED) Displays. Herstellungsbedingt oder auch bedingt durch Alterungseffekte können lichttechnische Eigenschaften, beispielsweise photometrische und/oder colorimetrische Parameter von Pixeln variieren.

Daher ist es notwendig, die Ansteuerung von Pixeln solcher Displays individuell auf deren Variationen abzustimmen. Hierzu sind Verfahren bekannt, bei denen in einem ersten Schritt ein Display pixelbezogen lichttechnisch vermessen wird und daraus in einem zweiten Schritt individuelle, auf einzelne Pixel oder auf Pixelgruppen bezogene Korrekturen für deren Ansteuerung ermittelt werden. Eine Gruppe solcher Verfahren wird als DeMura - Verfahren bezeichnet.

Das Dokument US 9,135,851 B2 beschreibt ein Verfahren und eine Vorrichtung für eine derartige Vermessung und Korrektur elektrooptischer Displays. In einer Ausführungsform des Verfahrens wird eine Folge von Mustern erzeugt, mit denen je eine Gruppe oder Teilmenge von Licht emittierenden Anzeigeelementen des Displays aktiviert wird und dessen übrige Anzeigeelemente deaktiviert werden, beispielsweise in Form von regelmäßigen Gittern von nicht benachbarten, aktivieren Anzeigeelementen, zwischen denen nicht aktivierte Anzeigeelemente liegen.

Für jedes solches Muster erfasst eine Bildaufnahmevorrichtung Informationen über die aktivierten Anzeigeelemente. Eine Recheneinheit analysiert diese erfassten Informationen, vergleicht die erfasste lichttechnische Ist-Ausgabe der aktivierten Anzeigeelemente mit einer lichttechnischen Soll-Ausgabe und ermittelt daraus Korrekturfaktoren zur Kalibrierung des Displays derart, dass dessen Ist-Ausgabe näher an der Soll-Ausgabe liegt. Die Korrekturfaktoren können in eine Firmware zur Ansteuerung des Displays geladen oder zur Verarbeitung von Bildern verwendet werden, die auf dem Display dargestellt werden sollen.

Das Dokument US 2020/0211502 A1 beschreibt eine Vorrichtung zur Korrektur von Mura-Fehlern in einem fotografisch erfassten Bild eines Displays. Die Vorrichtung kann einzelne Mura-Pixel detektieren und eine Korrektur auf derartige einzelne Mura-Pixel anwenden. Zudem kann die Vorrichtung blockbasierte Korrekturen auf Mura-Pixel anwenden, die in einem Bereich eines Mura-Blocks liegen.

Das Dokument WO 2004/070693 A2 beschreibt eine Vorrichtung und ein Verfahren zur optischen Inspektion eines Displays, welches mit Subpixel-Genauigkeit Primärfarbkanäle zur Bestimmung eines Rotationswinkels heranzieht. Das Verfahren umfasst mindestens zwei abschnittsweise Aufnahmen eines Bildes mit R x S Sensorpixeln von einem Display. Sensorkoordinaten werden einem Pixel zugeordnet. Daraus werden mehrere Winkelunterschiede zwischen Pixeln auf dem Display und Sensorpixeln sowie mehrere horizontale und vertikale Skalierungsfaktoren für jede Aufnahmeposition ermittelt. Daraus werden mehrere Wichtungsfaktoren bestimmt und den R x S Sensorpixeln zugeordnet. Es werden mehrere erste Leuchtdichtewerte für die R x S Sensorpixel bestimmt und hieraus sowie aus den Wichtungsfaktoren mehrere zweite (absolute) Leuchtdichtewerte ermittelt. Auf diese Weise werden skalierte Bilder umfassend die ersten und zweiten Leuchtdichtewerte gebildet und zur Identifizierung möglicher Defekte von Pixeln des Displays ausgewertet.

Das Dokument WO 2015/104384 A1 beschreibt ein Verfahren zur Korrektur geometrischer Verzeichnungen in einem oder mehreren Bildern und/oder zu deren Alignierung mittels Punktmustern, beispielsweise mittels in einem quasiperiodischen Gitter angeordneten Punkten.

Das Dokument US 5,650,844 A beschreibt ein Verfahren zur Analyse von Defektpixeln, wobei die Position der Displaypixel in Kamerakoordinaten durch ein Kalibrierbild mit Leuchtpunkten ermittelt wird, das auf einem Display dargestellt und mit einer Kamera aufgenommen wird.

Das Dokument WO 2009/095449 A2 beschreibt ein Verfahren zur Bestimmung eines Orts auf einer Oberfläche mittels eines von dieser Oberfläche aufgenommenen Bildes. Die Oberfläche wird in eine Mehrzahl von Zellen unterteilt, die entlang einer ersten und senkrecht hierzu entlang einer zweiten Richtung angeordnet sind. Jede Zelle umfasst eine Mehrzahl von Markierungen, die ein Muster bilden, das die Zelle eindeutig identifiziert. Die Grenze einer ersten Zelle wird mindestens teilweise aus denjenigen Orten bestimmt, an denen Markierungen entlang der ersten oder entlang der zweiten Richtung nebeneinander liegen. Der Ort der ersten Zelle wird aus dem Muster der Markierungen in der ersten Zelle bestimmt.

Der Erfindung liegt die Aufgabe zu Grunde, ein verbessertes Verfahren zur lichttechnischen Vermessung eines Displays anzugeben. Der Erfindung liegt ferner die Aufgabe zu Grunde, eine verbesserte Vorrichtung zur lichttechnischen Vermessung eines Displays sowie ein verbessertes Verfahren zur Ansteuerung eines Displays anzugeben.

Hinsichtlich des Verfahrens zur lichttechnischen Vermessung eines Displays wird die Aufgabe erfindungsgemäß durch ein Verfahren mit den Merkmalen des Anspruchs 1 gelöst. Hinsichtlich der Vorrichtung zur lichttechnischen Vermessung eines Displays wird die Aufgabe erfindungsgemäß durch eine Vorrichtung mit den Merkmalen des Anspruchs 13 gelöst. Hinsichtlich des Verfahrens zur Ansteuerung eines Displays wird die Aufgabe erfindungsgemäß mit einem Verfahren mit den Merkmalen des Anspruchs 11 gelöst.

Vorteilhafte Ausgestaltungen der Erfindung sind Gegenstand der Unteransprüche.

Bei einem Verfahren zur lichttechnischen Vermessung eines Displays mit Anzeigeelementen, die in einem Displaykoordinatensystem angeordnet sind, wird das Display zur Anzeige mindestens eines Testbildes angesteuert. Bevorzugt wird das Display zur Anzeige eines solchen Testbilds so angesteuert, dass bei perfekten Anzeigeelementen ohne individuelle Variationen bezüglich mindestens eines lichttechnischen Parameters ein homogenes Testbild dargestellt wird, welches also beispielsweise eine gleichmäßige Helligkeit und/oder Farbe in den Ansteuerdaten für die Anzeige aufweist. Die vom Display tatsächlich realisierte Helligkeits- oder Farbverteilung des Testbildes kann jedoch aufgrund der individuellen Variationen der Anzeigeelemente (Pixelvariationen) ungleichmäßig sein.

Während das Display das Testbild darstellt, wird mindestens ein Ausschnitt des Displays mit einer Messkamera, die zur lichttechnischen Vermessung eingerichtet ist, in mindestens einem Kamerabild erfasst. Die Messkamera weist einen Sensor mit in einem Kamerakoordinatensystem angeordneten Sensorpixeln auf. Beispielsweise kann eine Messkamera als Leuchtdichtemesskamera ausgebildet sein.

Die Anzeigeelemente des Displays und/oder die Sensorpixel der Kamera können matrixartig angeordnet sein.

Erfindungsgemäß wird das Display vor oder nach der Anzeige des mindestens einen Testbildes zur Anzeige von mindestens einem nachfolgend noch genauer erläuterten Positionscode angesteuert. Bevorzugt ist der Positionscode als absolut codierender Positionscode (im Folgenden auch als "absoluter Positionscode" bezeichnet) ausgebildet.

Erfindungsgemäß ist die Pose oder Lage (das heißt: die Position und die Ausrichtung) des Displays relativ zur Messkamera bei der Anzeige des Testbildes unverändert gegenüber der Lage des Displays relativ zur Messkamera bei der Anzeige des mindestens einen Positionscode. Diese Lage wird hier und im Folgenden als Messposition bezeichnet. Mit anderen Worten: in mindestens einer ersten Messposition werden sowohl der mindestens eine Positionscode als auch das mindestens eine Testbild vom Display angezeigt und von der Messkamera aufgenommen. Nach einem nachfolgend noch genauer erläuterten Aspekt sieht die Erfindung vor, dasselbe oder ein baugleiches anderes Display zur Anzeige mindestens eines bereits in der ersten Messposition angezeigten und aufgenommenen Testbildes anzusteuern und dieses mit der Messkamera aufzunehmen, wobei Messkamera und Display in einer zur ersten Messposition näherungsweise, jedoch nicht vollkommen gleichen Lage (das heißt: in einer zweiten oder weiteren Messposition) angeordnet sein können.

Unter einem Positionscode wird hier und im Folgenden ein Muster von Aktivierungen der Anzeigeelemente des Displays verstanden, das für eine örtliche Zuordnung (oder Positionsbestimmung) von mindestens einem Anzeigeelement relativ zum Displaykoordinatensystem eingerichtet ist.

Relativ kodierende Positionscodes (relative Positionscodes) sind für die Positionsbestimmung relativ zu einem vorbestimmten, festen Bezug des Displays eingerichtet. Ein relativer Positionscode kann beispielsweise als regelmäßiges Gitter von beabstandeten aktivierten Anzeigeelementen ausgebildet sein. Durch Abzählen der aktivierten Anzeigeelemente relativ beispielsweise zu einer Ecke oder zu einer Seitenbegrenzung des Displays kann deren Position im Displaykoordinatensystem bestimmt werden.

Ein relativer Positionscode kann somit durch eine vorbestimmte und bekannte absolute Anzahl von Strukturelementen (beispielsweise Gitterpunkten) gegeben sein, die vollständig von der Messkamera erfasst werden und deren Anordnung, bezogen auf das Displaykoordinatensystem, bekannt ist.

Alternativ kann bei einem relativen Positionscode der Absolutbezug zu einem Displaykoordinatensystem auch dadurch hergestellt werden, dass für mindestens ein von der Messkamera aufgenommenes Referenzpixel dessen Position (relativ zum Displaykoordinatensystem) bekannt ist. Beispielsweise kann ein solches Referenzpixel (wenn das Display und die Messkamera zur Darstellung beziehungsweise zur Aufnahme farbiger Bilder eingerichtet sind), durch eine besondere Farbe identifizierbar sein, die von der Farbe der übrigen, am Display aktiv angesteuerten Anzeigeelemente abweicht.

Demgegenüber sind absolut kodierende Positionscodes (absolute Positionscodes) für eine Positionsbestimmung im Displaykoordinatensystem auch ohne einen solchen, in einem Kamerabild erfassten vorbestimmten, festen Bezug zum Displaykoordinatensystem (der beispielsweise als mechanische Displaybegrenzung oder als Referenzpixel erfasst sein kann) eingerichtet. Insbesondere sind absolute Positionscodes zur Positionsbestimmung von Anzeigeelementen eines Displays auch dann eingerichtet, wenn dieses Display und/oder der absolute Positionscode selbst (das heißt: die Gesamtheit aller dafür auf dem Display dargestellten Strukturen, beispielsweise Gitterpunkte, des absoluten Positionscodes) nur in einem Ausschnitt erfasst ist.

Hierzu kann ein absoluter Positionscode eine Mehrzahl von Strukturelementen umfassen, die durch Aktivierung von ausgewählten Anzeigeelementen auf dem Display dargestellt werden, wobei diese Strukturelemente so ausgebildet sind, dass innerhalb eines von der Messkamera aufgenommenen Bereichs dieses absoluten Positionscodes jedes der darin aufgenommenen Strukturelemente von jedem anderen der darin aufgenommenen Strukturelemente unterscheidbar ist. Mit anderen Worten: wenn ein derartiger absoluter Positionscode in einem für die Erkennung mindestens eines Strukturelements ausreichend großen Bereich von der Messkamera aufgenommen wird, so kann jedes der in dem Kamerabild erfassten Strukturelemente identifiziert und somit auch einer Position im Displaykoordinatensystem zugeordnet werden.

Bevorzugt umfassen derartige Strukturelemente eine Mehrzahl von benachbarten (jedoch nicht notwendigerweise angrenzenden) und/oder in einem zusammenhängenden Bereich des Displays angeordneten aktivierten Anzeigeelementen.

Demgemäß ist ein absoluter Positionscode zur Positionsbestimmung auch dann eingerichtet, wenn von der Messkamera keine Seitenbegrenzung oder Ecke des Displays erfasst oder wenn mindestens ein Rand des Displays mechanisch verdeckt ist, so dass die Nummer (das heißt: der Index) der ersten sichtbaren Spalte oder Zeile von matrixartig angeordneten Anzeigeelementen (Pixeln) unbekannt ist.

Ferner erlaubt ein absoluter Positionscode die eindeutige Zuordnung von Anzeigeelementen (Displaypixeln) zu Koordinaten des Displaykoordinatensystems auch dann, wenn nicht alle zur Darstellung des absoluten Positionscodes angesteuerte Displaypixel von der Messkamera erfasst werden und lediglich die Codierungsregel des absoluten Positionscodes bekannt ist.

Insbesondere ist bei Anwendung eines absoluten Positionscodes ein konkreter Absolutbezug mindestens eines Referenzpixels im Displaykoordinatensystem nicht erforderlich. Es ist auch nicht erforderlich, dass sämtliche Displaypixel von der Messkamera erfasst werden. Wie nachfolgend noch genauer erläutert wird, ist zur Bestimmung von Displaykoordinate auch die nur teilweise Aufnahme eines solchen absoluten Positionscodes durch die Messkamera ausreichend.

Wird demgegenüber bei einem relativen Positionscode, der beispielsweise als einfaches, regelmäßiges Punktgitter ausgebildet sein kann, beispielsweise ein komplette Spalte von Gitterpunkten abgedeckt, so kann aus dem mit der Messkamera aufgenommenem Kamerabild selbst nicht ermittelt werden, ob die im Kamerabild fehlende Spalte an der rechten oder an der linken Seite des Punktgitters angeordnet ist. Absolute Positionscodes weisen gegenüber relativen Positionscodes somit eine verbesserte Robustheit gegenüber ausschnittsweisen Messungen auf.

Ferner können, da sie stets vollständig von der Messkamera erfasst werden müssen, relative Positionscodes nur mit einer begrenzten Anzahl von Strukturen (beispielsweise Gitterpunkten) und dementsprechend nur in einer vergleichsweise geringen Auflösung verwendet werden, was ihren praktischen Nutzen, einschränkt.

Demgegenüber kann bei absoluten Positionscodes eine Darstellung in einer deutlich höheren Punktdichte (beispielsweise mit dichteren Punktgittern) erfolgen, da eine unvollständige Erfassung von absoluten Positionscodes, beispielsweise aufgrund optisch verdeckter oder von vornherein nicht ansteuerbarer Displaypixel nicht zu Mehrdeutigkeiten bei der Zuordnung von Displaykoordinaten führen. Diese höhere Punktdichte erlaubt eine genauere Positionsbestimmung (bezogen auf das Displaykoordinatensystem) zwischen den für den absoluten Positionscode genutzten Anzeigeelementen.

Das heißt: Indem der mindestens eine Positionscode als absoluter Positionscode ausgebildet ist, können auch solche Teilbereiche des Displays ausgewertet werden, in denen kein Bezug zum Display, beispielsweise eine Ecke oder eine Kante erfasst wurde.

Das Display wird während der Anzeige des mindestens einen Positionscodes, der bevorzugt als absoluter Positionscode ausgebildet ist, von der Messkamera mindestens ausschnittsweise aufgenommen.

Anhand des mindestens einen Positionscodes wird jeweils mindestens einem Anzeigeelement dessen Position im Displaykoordinatensystem zugeordnet und korrespondierend dazu die Position im Kamerakoordinatensystem ermittelt, auf die das Anzeigeelement jeweils in der Ebene des Sensors abgebildet wird.

Aus den derart im Displaykoordinatensystem und korrespondierend dazu im Kamerakoordinatensystem bestimmten Positionen für das mindestens eine Anzeigeelement wird eine Koordinatentransformation zur Transformation von Koordinaten des Kamerakoordinatensystems in Koordinaten des Displaykoordinatensystems ermittelt.

Für mindestens ein Anzeigeelement wird mindestens ein lichttechnischer Parameter ermittelt, indem mit der Messkamera bei der Darstellung des mindestens einen Testbildes die von Sensorpixeln erfassten Messwerte mittels der Koordinatentransformation in das Displaykoordinatensystem überführt werden.

Indem die mit den Sensorpixeln der Messkamera erfassten Messwerte in das Displaykoordinatensystem überführt werden, ist eine genaue Zuordnung von lichttechnischen Parametern zu Anzeigeelementen möglich, auf die sich insbesondere Abbildungsfehler, beispielsweise Verzeichnungen durch ein Objektiv der Messkamera, und Fehler oder Ungenauigkeiten in der Positionierung der Messkamera relativ zum Display weniger stark auswirken.

Insbesondere erlaubt die Verwendung eines absoluten Positionscodes eine gegenüber dem Stand der Technik deutlich höhere örtliche Auflösung an Stützstellen, wodurch sich derartige Fehler weniger stark auswirken. In vorteilhafter Weise kann die Sensorauflösung der Messkamera beschränkt werden, indem auf Verfahren zurückgegriffen wird, bei denen Teilbereiche des Displays sequentiell vermessen werden.

Eine auf einem absoluten Positionscode basierende Ausführungsform des Verfahrens ist insbesondere gegenüber Abbildungsfehlern eines Kameraobjektivs der Messkamera weniger fehleranfällig als die Verwendung von relativen Positionscodes. Mit anderen Worten: Durch die Verwendung des absoluten Positionscodes wird bei der Bestimmung der Displaykoordinaten aus den Kamerakoordinaten eine höhere Robustheit gegenüber Abweichungen der zu vermessenden Displays von einer (beispielsweise rechteckigen) Standardgeometrie erzielt. Ferner wird eine höhere Genauigkeit hinsichtlich der objektivspezifischen Korrektur erzielt als bei der Verwendung von relativen Positionscodes.

Dadurch ist eine genaue lichttechnische Vermessung eines Displays auch mit einer optisch weniger aufwändigen Messkamera und mit einer mechanisch weniger aufwändigen und präzisen Messanordnung möglich. Zudem kann bei verringertem optischen Aufwand die Lichtausbeute der Kamera erhöht und somit die Genauigkeit nicht nur der örtlichen Zuordnung der lichttechnischen Messwerte zu Anzeigeelementen, sondern auch die Genauigkeit der lichttechnischen Messwerte selbst verbessert werden.

Bei einer Ausführungsform des Verfahrens werden sequenziell Teilbereiche des Displays von der Messkamera aufgenommen, während das Display zur Anzeige mindestens eines Testbildes und zur Anzeige mindestens eines absoluten Positionscodes angesteuert wird. Für jeden Teilbereich wird jeweils eine Koordinatentransformation ermittelt und auf das in dem jeweiligen Teilbereich von der Messkamera erfasste Testbild angewendet.

Indem der mindestens eine Positionscode als absoluter Positionscode ausgebildet ist, können auch solche Teilbereiche des Displays ausgewertet werden, in denen kein Bezug zum Display, beispielsweise eine Ecke oder eine Kante, erfasst wurde.

Ein Vorteil dieser Ausführungsform besteht somit darin, dass großflächige Displays mit einer optisch einfachen Messkamera lichttechnisch vermessen werden können. Insbesondere ermöglicht diese Ausführung die Verwendung einer Messkamera, deren durch die Brennweite und die Sensorgröße beschränkter Öffnungswinkel zur Erfassung des gesamten Displays nicht ausreicht. Zudem kann, aufgrund der dadurch ermöglichten größeren Brennweite, ein Objektiv für die Messkamera eingesetzt werden, das nicht nur optisch weniger aufwändig ist, sondern auch eine geringere Verzeichnung aufweist.

Im Gegensatz zur Verwendung von relativen Positionscodes erlaubt die Verwendung eines absoluten Positionscodes das Übertragen einer bereits vorhandenen Algorithmik auf Displays in verschiedenen geometrischen Abmessungen ohne einen zusätzlichen Einrichtungsprozess, in dem auf einen korrekten Absolutbezug zu achten ist. Zudem ist das Verfahren in einer Ausführungsform mit absoluten Positionscodes robuster und weniger fehleranfällig, da eine höhere Punktdichte im absoluten Positionscode verwendet werden kann.

Bei einer Ausführungsform überdeckt die Gesamtheit der Teilbereiche das Display vollständig. Dadurch ist eine vollständige lichttechnische Vermessung des Displays möglich.

Positionscodes können beispielsweise als Primzahlgitter mit einer Gitterperiode p erzeugt werden, indem vertikal und horizontal jedes p -te Anzeigeelement aktiviert wird, wobei die Gitterperiode p eine Primzahl ist, und die dazwischen liegenden p - 1 Anzeigeelemente deaktiviert sind. Dabei ist eine umso genauere Positionsbestimmung möglich, je kleiner die Gitterperiode p ist.

Bei einer Ausführungsform wird ein absoluter Positionscode als Überlagerung einer Mehrzahl von Primzahlgittern mit individuellen Gitterperioden $p_1 < p_2 < ... < p_k$ gebildet.

Bei einer derartigen Überlagerung bilden die aktivierten Anzeigeelemente innerhalb eines kleinsten Rechtecks, das von aktivierten Anzeigeelementen des Primzahlgitters mit der größten Gitterperiode $p_k$ aufgespannt wird, ein Aktivierungsmuster, das sich erst bei einem Versatz um $p_1 \cdot p_2 \cdot \cdots p_k$ Positionen von Anzeigeelementen in vertikaler oder in horizontaler Richtung des Displaykoordinatensystems wiederholt.

Für eine von jedwedem äußeren Bezug unabhängige Positionsbestimmung für irgendein aktiviertes Anzeigeelement reicht es somit aus, einen Teilbereich des Displays zu erfassen, der in vertikaler und in horizontaler Richtung mindestens $p_k$ Anzeigeelemente umfasst und dessen Lage im Displaykoordinatensystem mit einer Genauigkeit von $p_1 \cdot p_2 \cdot \cdots p_k$ Positionen (oder genauer) bekannt ist, beispielsweise aus der Positionierung der Messkamera gegenüber dem Display.

Insbesondere ist eine absolute Positionsbestimmung jedenfalls dann möglich, wenn die individuellen Gitterperioden so gewählt sind, dass $p_1 \cdot p_2 \cdot \cdots p_k$ größer als die vertikale und größer als die horizontale Dimension des Displays ist (ausgedrückt als Anzahl untereinander beziehungsweise nebeneinander angeordneter Anzeigeelemente).

Diese Ausführungsform ermöglicht somit eine besonders einfache und, mittels ausreichend klein gewähltem $p_1$, zudem eine besonders genaue Zuordnung von Messungen der Messkamera zu Anzeigeelementen des Displays.

Bei einer Ausführungsform wird mindestens eine Koordinatentransformation zur Überführung von Koordinaten des Kamerakoordinatensystems in Koordinaten des Displaykoordinatensystems durch stückweise lineare Interpolation zwischen Stützstellen gebildet, welche jeweils als Position der Abbildung eines Anzeigeelements im Kamerakoordinatensystem ermittelt und anhand des Positionscodes einer Position des Anzeigeelements im Displaykoordinatensystem zugeordnet werden.

Ein Vorteil dieser Ausführungsform besteht darin, dass durch stückweise lineare Interpolation auch nicht-affine Transformationsbeziehungen zwischen dem Displaykoordinatensystem und dem Kamerakoordinatensystem erfasst werden können. Insbesondere können dadurch Verzeichnungen am Bildrand gut korrigiert werden.

Bei einer weiteren Ausführungsform wird mindestens eine Koordinatentransformation durch Ausgleichsrechnung von Stützstellen gebildet, welche jeweils als Position der Abbildung eines Anzeigeelements im Kamerakoordinatensystem ermittelt und anhand des mindestens eines Positionscodes einer Position dieses Anzeigeelements im Displaykoordinatensystem zugeordnet werden.

Ein Vorteil dieser Ausführungsform besteht darin, dass Ungenauigkeiten bei der Ermittlung einer einzelnen Stützstelle durch die Ausgleichsrechnung kompensiert und somit eine genauere Transformationsbeziehung zur Zuordnung von Messwerten zu einem Anzeigeelement bestimmt wird.

Gemäß einem weiteren Aspekt der Erfindung wird nach der Aufnahme des mindestens einen Testbildes und des mindestens einen Positionscodes, der bevorzugt als absoluter Positionscode ausgebildet ist, in der ersten Messposition dasselbe oder ein baugleiches weiteres Display in einer zweiten oder weiteren Messposition gegenüber der Messkamera angeordnet. Als "baugleich" sollen insbesondere solche Displays verstanden werden, deren Displaypixel in gleicher Technologie (beispielsweise als LCD oder als OLED) gefertigt und geometrisch gleich angeordnet sind (das heißt: mit gleichen Abmessungen, mit gleichen Displaypixelgrößen, mit gleichen Displaypixelabständen und, bei matrixartig angeordneten Displaypixeln, mit gleicher Spalten- und Zeilengröße der Displaymatrix). Baugleich sind somit verschiedene Displayexemplare einer einzigen, durch eine gemeinsame technische Spezifikation bestimmten Baureihe baugleich, insbesondere solche Displayexemplare, die in einer unveränderten Serienfertigung von Displays, beispielsweise in einem Lot, gefertigt werden und die sich somit ausschließlich durch Toleranzen und unvermeidbare Schwankungen im Fertigungsprozess unterscheiden.

Das gleiche oder baugleiche weitere Display wird in dieser zweiten oder weiteren Messposition zur Anzeige mindestens eines Testbildes angesteuert. Dieses mindestens eine Testbild wird mindestens ausschnittsweise in einem Kamerabild von der Messkamera erfasst.

Das in der zweiten oder weiteren Messposition (das heißt: mit dem gleichen oder baugleichen Display) angezeigte mindestens eine Testbild stimmt mit mindestens einem korrespondierenden, der in der ersten Messposition angezeigten Testbild in mindestens einem Merkmal überein, das in dem von der Messkamera jeweils erfassten Ausschnitt des Testbildes beziehungsweise des korrespondierenden Testbildes liegt.

Ein solches Merkmal ist durch örtlich eindeutig zuordenbare Strukturen im Testbild gegeben, die eine bezogen auf das Displaykoordinatensystem gleiche Lage und/oder Anordnung und/oder Ausdehnung aufweisen. Ein solches Merkmal kann beispielsweise durch eine Ecke oder durch eine Kante (eine seitliche oder obere oder untere Begrenzung) eines Testbildes mit rechteckigem Umfang gegeben sein. Alternativ oder zusätzlich kann ein solches Merkmal auch durch eine dem Testbild aufgeprägte Struktur (beispielsweise ein Muster oder eine geometrische Figur) gegeben sein. Bevorzugt sind Merkmale so ausgebildet, dass sie sehr leicht und zuverlässig von einer automatischen Bildverarbeitung erkannt und voneinander unterschieden werden können.

Wie bereits dargelegt, sind einem (in der zweiten / weiteren Messposition dargestellten) Testbild und in dem dazu korrespondierenden (in der ersten Messposition dargestellten) Testbild gleiche Merkmale an bezogen auf das jeweilige Displaykoordinatensystem gleichen Orten dargestellt. Aufgrund des Unterschieds zwischen der ersten und der zweiten / weiteren Messposition erscheint jedoch dasselbe Merkmal im Kamerabild (das heißt: bezogen auf das Kamerakoordinatensystem) der zweiten/weiteren Messposition versetzt gegenüber der Lage im Kamerabild der ersten Messposition. Dieser Versatz wird für jedes von der Messkamera erfasste Merkmal als Merkmalsverschiebung bestimmt. Somit ergibt sich entsprechend der Anzahl der angezeigten und erfassten Merkmale eine Anzahl von Merkmalsverschiebungen, die insgesamt den Unterschied zwischen der ersten und der zweiten / weiteren Messposition charakterisieren.

Aus der Gesamtheit der Merkmalsverschiebungen wird eine lagebezogene Koordinatentransformation bestimmt, die die Veränderung der Lage und Ausrichtung des Kamerakoordinatensystems bezogen auf das Displaykoordinatensystem in der zweiten / weiteren Messposition gegenüber der Lage und Ausrichtung des Kamerakoordinatensystems bezogen auf das Displaykoordinatensystem in der ersten Messposition beschreibt.

Mit anderen Worten: Wenn ein Anzeigeelement (Displaypixel) in der zweiten/weiteren Messposition im Kamerabild an einen zweiten/weiteren Ort abgebildet wird, so überführt die Anwendung der lagebezogenen Koordinatentransformation diesen zweiten/weiteren Ort in einen ersten Ort, auf den eben dieses Anzeigeelement in dem Kamerabild abgebildet worden wäre, wenn das Display in der ersten Messposition aufgenommen worden wäre.

Nachfolgend wird diese lagebezogene Koordinatentransformation auf das in der zweiten / weiteren Messposition erfasste Kamerabild angewendet. Auf das derart transformierte Kamerabild wird die Koordinatentransformation zur Transformation von Kamerakoordinaten (Koordinaten des Kamerakoordinatensystems) in Displaykoordinaten (Koordinaten des Displaykoordinatensystems) angewendet, die anhand des mindestens einen, in der ersten Messposition angezeigten, aufgenommenen und ausgewerteten Positionscodes ermittelt wurde. Auf diese Weise kann das in der zweiten/weiteren Messposition aufgenommene Kamerabild auf das Displaykoordinatensystem abgebildet und somit einzelnen Anzeigeelementen (Displaypixeln) zugeordnet werden.

Sodann wird für mindestens ein Anzeigeelement durch Auswertung des Kamerabilds in einer oben bereits dargelegten Weise mindestens ein lichttechnischer Parameter bestimmt.

Dieser Aspekt der Erfindung weist den Vorteil auf, dass eine Folge von Messungen mit einem Display, oder bevorzugt mit mehreren baugleichen Displays, in Messpositionen vorgenommen werden kann, die sich im Rahmen einer Toleranz sowohl des/der Displays als auch der Anordnung gegenüber der Messkamera unterscheiden können, ohne dass es für jede Messposition einer erneuten Anzeige, Aufnahme und Auswertung des mindestens einen Positionscodes bedarf.

In vorteilhafter Weise wird dadurch einerseits Messzeit für die Anzeige und Aufnahme des/der Positionscodes eingespart. Ferner werden andererseits Rechenzeit und Rechenaufwand für die Auswertung des/der Positionscodes (das heißt: für die jedesmalige Bestimmung der Transformation von Kamerakoordinaten in Displaykoordinaten in der zweiten/weiteren Messposition) eingespart.

Bei einer Ausführungsform nach diesem Aspekt der Erfindung wird mindestens ein Eckpunkt eines Testbildes mit rechteckigem Umfang als Merkmal bestimmt. Da ein Testbild bevorzugt näherungsweise homogen und gut unterscheidbar gegenüber einem Hintergrund (einem nicht angesteuerten Bereich des Displays und/oder einem Rand oder Rahmen des Displays) angezeigt wird, sind dessen Eckpunkte mit aus dem Stand der Technik bekannten automatischen Bildauswertungsverfahren leicht, robust und genau bestimmbar.

Bei einer weiteren Ausführungsform wird mindestens eine Kante, die ein Testbild mit rechteckigem Umfang seitlich oder nach oben oder nach unten begrenzt, als Merkmal bestimmt. Auch derartige Kanten sind, wie Eckpunkte, automatisch leicht und genau erfassbar und weisen zusätzlich den Vorteil auf, dass sie auch bei beschränkten Störungen (beispielsweise einem verrauschten Kamerabild und/oder einer teilweisen Abdeckung in dem Kamerabild) in ihrer Lage sehr genau erfassbar sind.

Bevorzugt wird in der Ausführungsform und in den nachfolgend noch beschriebenen Ausführungsformen umfassend die Bestimmung von Merkmalen in einem Testbild ein absoluter Positionscode zur Bestimmung der Transformation von Kamerakoordinaten in Displaykoordinaten auf dem Display dargestellt. Es können hierbei jedoch auch relative Positionscodes verwendet und nachfolgend in einem Testbild Merkmale bestimmt werden.

Bei nur geringen Unterschieden zwischen der ersten und der zweiten/weiteren Messposition kann eine lagebezogene Koordinatentransformation mit sehr guter Näherung als affine Transformation, bevorzugt als eine Verschiebung (ein Versatz) und/oder eine Rotation und/oder eine Scherung bestimmt werden. Affine Transformationen sind sowohl in der Bestimmung ihrer Parameter als auch in ihrer Anwendung zur Transformation eines Kamerabildes besonders einfach und mit geringem Rechenaufwand verbunden.

Allgemein kann eine affine lagebezogene Koordinatentransformation, die bis zu sechs freie Parameter aufweist, anhand der Merkmalsverschiebung von höchstens drei Merkmalen besonders leicht durch Lösung eines Gleichungssystems exakt bestimmt werden. Für spezielle affine lagebezogene Koordinatentransformationen (beispielsweise eine reine Verschiebung oder eine reine Rotation oder eine reine Skalierung) mit höchstens vier freien Parametern ist auch die Bestimmung einer geringeren Anzahl von Merkmalen (lediglich zwei oder nur ein Merkmal) ausreichend. Sofern aus der Art des Zustandekommens eines Unterschieds zwischen den Messpositionen die affine lagebezogene Koordinatentransformation auf einen derartigen Spezialfall beschränkt werden kann, ist eine besonders leichte und schnelle Bestimmung möglich.

Bei einer Ausführungsform werden mehr als drei Merkmale bestimmt und deren jeweilige Merkmalsverschiebung ermittelt und daraus die Parameter einer affinen lagebezogenen Koordinatentransformation durch lineare Ausgleichsrechnung bestimmt. Eine solche lineare Ausgleichsrechnung (oder Lösung eines Quadratmittelproblems) passt die affine lagebezogene Koordinatentransformation im Sinne eines minimalen quadratischen Fehlers bestmöglich an die Mehrzahl der Merkmalsverschiebungen an. Dadurch können Fehler oder Ungenauigkeiten bei der Bestimmung einzelner Merkmalsverschiebungen kompensiert und somit besonders zuverlässige lagebezogene Koordinatentransformationen ermittelt werden. Zudem sind Verfahren der linearen Ausgleichsrechnung effizient und numerisch stabil umsetzbar.

Bei einem Verfahren zur Ansteuerung eines Displays wird in einem Kalibrationsschritt mindestens ein Istwert eines lichttechnischen Parameters für mindestens ein Anzeigeelement mit einem der vorab beschriebenen Verfahren ermittelt und mit einem Sollwert verglichen und eine Korrektur der Ansteuerung des mindestens einen Anzeigeelements derart ermittelt, dass der mindestens eine Istwert besser mit dem Sollwert übereinstimmt.

Ein Vorteil dieses Verfahrens besteht darin, dass Abweichungen einzelner Anzeigeelemente von Spezifikationsvorgaben besonders leicht und genau korrigiert werden können, insbesondere für sehr große Displays.

Bei einer Ausführungsform dieses Verfahrens wird in dem Kalibrationsschritt jeweils ein Istwert eines lichttechnischen Parameters für eine Mehrzahl von Anzeigeelementen ermittelt. Die Istwerte werden gegeneinander verglichen. Die Ansteuerung der Mehrzahl von Anzeigeelementen des Displays wird derart verändert, dass Unterschiede zwischen den Istwerten für die Mehrzahl der Anzeigeelemente verringert werden.

Ein Vorteil dieses Verfahrens besteht darin, dass Displays, insbesondere sehr große Displays, besonders leicht und genau korrigiert werden können, dass ein gleichmäßiger Helligkeits- und/oder Farbeindruck entsteht.

Eine Vorrichtung zur Vermessung eines Displays umfasst eine Messkamera und eine Steuer- und Auswerteeinheit. Erfindungsgemäß ist Steuer- und Auswerteeinheit mit der Messkamera zur Auslösung und Übertragung von Kamerabildern gekoppelt und zur Durchführung eines der oben beschriebenen Verfahren eingerichtet.

Mit einer derartigen Vorrichtung können Displays besonders einfach lichttechnisch vermessen und/oder korrigiert werden.

In einer Ausführungsform umfasst die Vorrichtung eine Bewegungseinheit, die zur Bewegung der Messkamera zwischen Messpositionen eingerichtet ist, in denen ein näherungsweise senkrecht zur optischen Achse der Messkamera angeordnetes Display in jeweils einem Teilbereich erfassbar ist.

Diese Ausführungsform ermöglicht die abschnittsweise Vermessung insbesondere sehr großer Displays mittels einer Messkamera mit einem beschränkten Öffnungswinkel. Dadurch kann mit einer optisch einfachen Kamera auch ein großes Display sehr genau lichttechnisch vermessen werden.

Ausführungsbeispiele der Erfindung werden im Folgenden anhand einer Zeichnung näher erläutert. Darin zeigen:

| | |
|---|---|
| Figur 1 | schematisch eine Vorrichtung zur lichttechnischen Vermessung eines elektronischen Displays nach dem Stand der Technik, |
| Figuren 2A bis 2D | schematisch Positionscodes zur Positionsbestimmung von Clustern belichteter Sensorpixel relativ zu einem Displaykoordinatensystem, |
| Figur 3 | schematisch die Abbildung eines aus überlagerten Primzahlgittern gebildeten Positionscodes auf einen Ausschnitt eines Sensors einer Messkamera, |
| Figur 4 | schematisch eine Vorrichtung zur lichttechnischen Vermessung eines elektronischen Displays mit einer Bewegungseinheit, sowie |
| Figuren 5A, 5B und Figuren 6A, 6B | schematisch die Abbildung jeweils eines Displays in einem Kamerakoordinatensystem. |

Einander entsprechende Teile sind in allen Figuren mit den gleichen Bezugszeichen versehen.

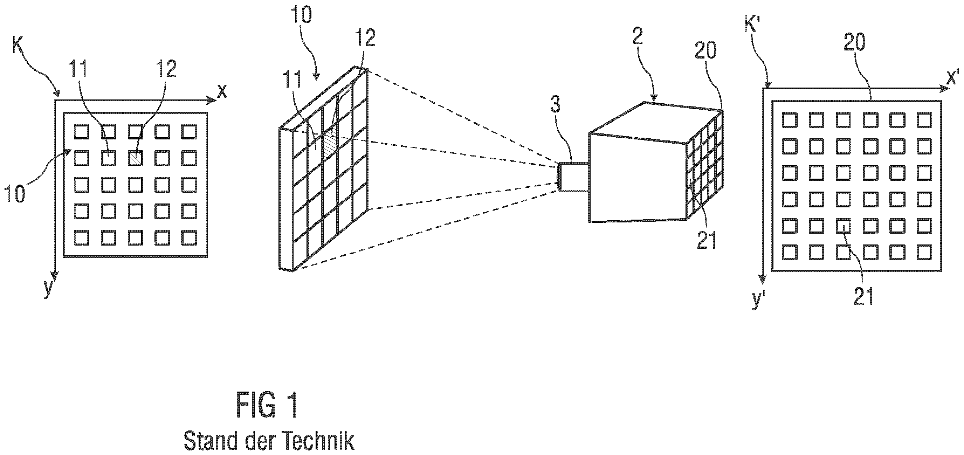

**Figur 1** zeigt beispielhaft eine Vorrichtung zur lichttechnischen Vermessung eines visuellen elektronischen Displays 10. Hier und im Folgenden soll unter einem elektronischen Display 10 eine elektrisch betriebene Anzeigevorrichtung mit unabhängig voneinander schaltbaren und/oder (in Farbe und/oder Helligkeit) modulierbaren diskreten Anzeigeelementen 11, 12 verstanden werden. Im vorliegenden Beispiel sind die Anzeigeelemente 11, 12 matrixartig entlang einer vertikalen Richtung y und einer horizontalen Richtung x eines Displaykoordinatensystems K angeordnet dargestellt, es sind aber auch andere Anordnungen der Anzeigeelemente 11, 12 möglich.

Ein bekanntes Problem derartiger Displays 10 besteht darin, dass ein erstes Anzeigeelement 11 und ein zweites Anzeigeelement 12, wenn sie elektrisch gleichartig angesteuert werden, in ihren lichttechnischen Parametern (beispielsweise in ihrer Leuchtdichte oder in ihrer Farbe) abweichen können. Um einen zur Ansteuerung des Displays 10 möglichst gut übereinstimmenden visuellen Eindruck zu erzielen, ist es erforderlich, solche Unterschiede durch eine individuelle Kompensation in der Ansteuerung der einzelnen Anzeigeelemente 11, 12 zu korrigieren. Eine Gruppe von derartigen Korrekturverfahren sind als DeMURA Verfahren bekannt.

Ein anderes bekanntes Problem besteht darin, dass einzelne Anzeigeelemente 11, 12 ausfallen können. Zur Qualitätssicherung von Displays 10 kann es erforderlich sein, Anzahl und Ort ausgefallener Anzeigeelemente 11, 12 zu ermitteln.

Aus den genannten Problemen ergibt sich die Aufgabe, Anzeigeelemente 11, 12 eines Displays 10 individuell lichttechnisch zu vermessen. Hierzu werden Messvorrichtungen mit einer Messkamera 2 verwendet, die über ein Objektiv 3 das Display 10 erfasst und auf einen Sensor 20 abbildet, der zur Messung eines oder mehrerer lichttechnischer Parameter eingerichtet ist. Der Sensor 20 weist matrixartig angeordnete Sensorpixel 21 auf, die matrixartig entlang einer horizontalen Richtung x' und einer vertikalen Richtung y' eines Kamerakoordinatensystems K' angeordnet sind. Zur Vereinfachung der Darstellung sind die horizontalen und vertikalen Richtungen x, x' beziehungsweise y, y' jeweils parallel dargestellt, jedoch können das Displaykoordinatensystem K und das Kamerakoordinatensystem K' auch gegeneinander verdreht angeordnet sein.

Damit mittels einer solchen Messvorrichtung in einem Messbild der Kamera 2 einem Anzeigepixel 11, 12 mindestens ein lichttechnischer Parameter individuell zugeordnet werden kann, mit anderen Worten: damit verschiedene Anzeigepixel 11, 12 in ihrer Projektion auf den Sensor 20 voneinander unterschieden werden können, sind Sensoren 20 mit einer großen Anzahl von Sensorpixeln 21 erforderlich, welche die Anzahl von Anzeigeelementen 11, 12 im Allgemeinen deutlich überschreitet. Zudem muss das Objektiv 3 eine hohe optische Qualität, insbesondere eine hohe Schärfe der Punktabbildung aufweisen.

Aus dem Stand der Technik sind auch Verfahren bekannt, bei denen diese optischen und Auflösungsanforderungen an die Kamera 2 mit dem Objektiv 3 dadurch entspannt werden, dass an Stelle eines einzigen Bildes mit der Kamera 2 n Einzelmessbilder aufgenommen werden, bei denen jeweils nur ein Teil (1/n) der Gesamtheit der Anzeigeelemente 11, 12 aktiviert wird, die in möglichst großen Abständen zueinander ausgewählt werden.

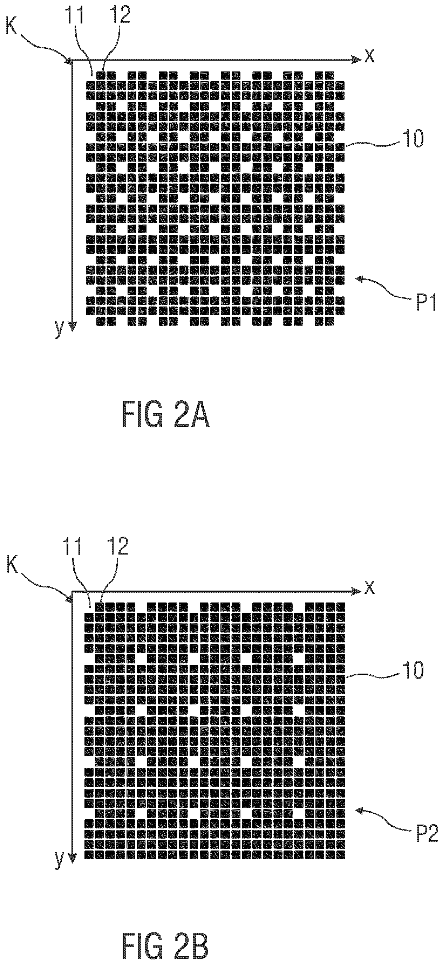

Die **Figuren 2A bis 2D** zeigen beispielhaft Positionscodes P1 bis P4, die dargestellt werden, indem ausgewählte Anzeigeelemente 11, 12 eines Displays 10 aktiviert werden. Ein Positionscode P1 bis P4 gibt die Vorschrift an, nach welcher in den Figuren 2A bis 2D weiß dargestellte Anzeigeelemente 11, 12 aktiviert (hell angesteuert) werden und dazwischen liegende, schwarz dargestellte Anzeigeelemente 11, 12 nicht aktiviert (dunkel angesteuert) werden, also insgesamt als Binärmuster dargestellt werden. Es sind jedoch auch andere Positionscodes bekannt, bei denen aktivierte Anzeigeelemente 11, 12 nicht binär angesteuert, sondern in der Farbe und/oder in der Intensität moduliert sind.

Positionscodes P1 bis P4 erlauben eine Zuordnung der Position mindestens einiger aktivierter Anzeigeelemente 11, 12 im Displaykoordinatensystem K.

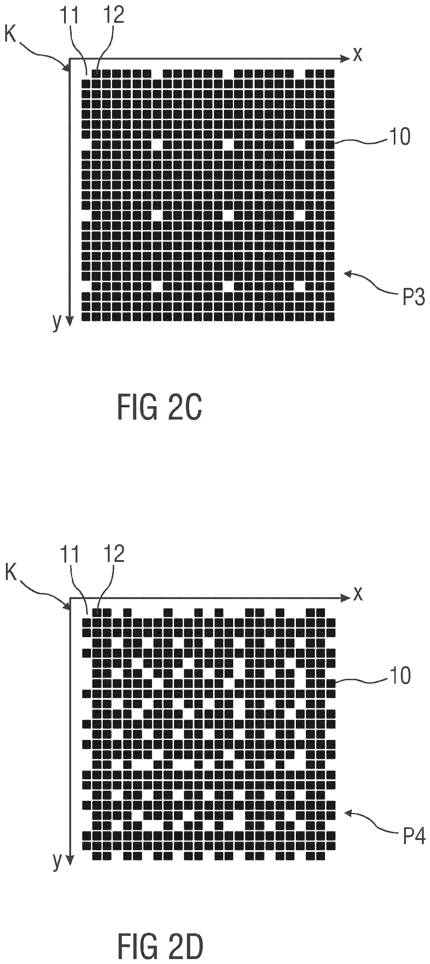

In jeder der Figuren 2A bis 2C sind beispielhaft als Primzahlgitter P1 bis P3 ausgebildete Positionierungscodes P1 bis P3 dargestellt, bei denen die Abstände zwischen aktivierten Anzeigeelementen 11, 12 als Primzahl gewählt sind: in Figur 2A ist zur Darstellung des ersten Positionscodes P1 jedes (in vertikaler wie auch in horizontaler Richtung x, y ) dritte Anzeigeelement 11, 12 aktiviert, in Figur 2B ist zur Darstellung des zweiten Positionscodes P2 jedes fünfte Anzeigeelement 11, 12 aktiviert, in Figur 2C ist zur Darstellung des dritten Positionscodes P3 jedes siebte Anzeigeelement 11, 12 aktiviert. Die Primzahlgitter P1 bis P3 entsprechen also den Primzahlen 3, 5 und 7.

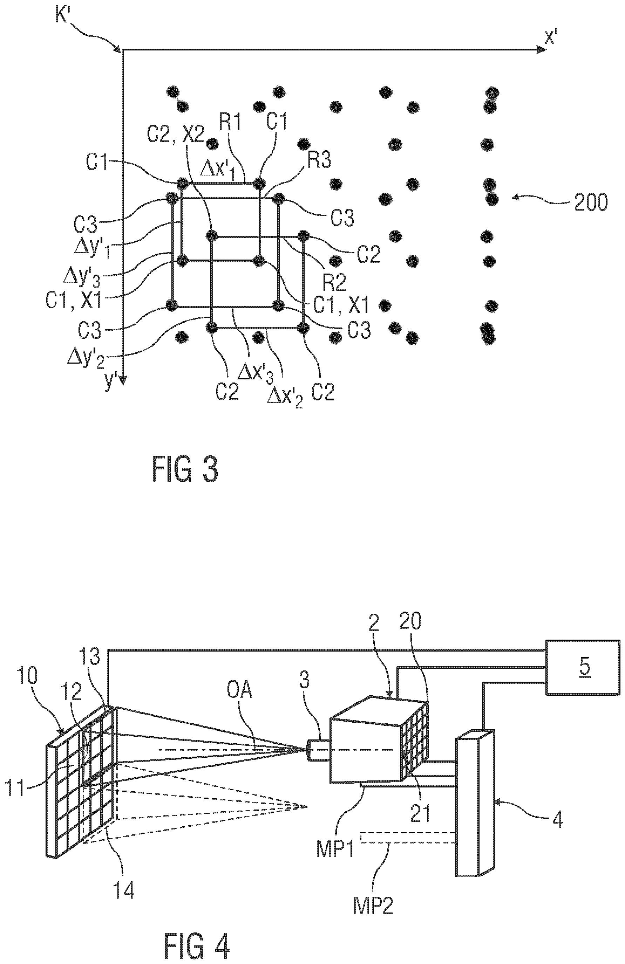

Bei der Aufnahme eines mit einem Primzahlgitter P1 bis P3 angesteuerten Displays 10 wird dieses auf den Sensor 20 abgebildet. Abhängig vom Abbildungsmaßstab und dem Pixelpitch des Sensors 20 kann ein einzelnes aktiviertes Anzeigeelement 11, 12 ein einzelnes Sensorpixel 21 oder einer Mehrzahl von benachbarten Sensorpixeln 21 belichten. Derartige Cluster C1, C2, C3 von benachbarten (zusammenhängend belichteten) Sensorpixeln 21 werden anhand ihrer Signalintensität ermittelt und durch Abzählen in horizontaler und vertikaler Richtung x', y' den jeweils aktivierten Anzeigeelementen 11, 12 des Displays 10 zugeordnet, wie nachfolgende anhand von Figur 3 noch genauer erklärt werden wird.

Beispielsweise kann, wenn der erste Positionscode P1 vom Display 10 angezeigt wird, in einem Kamerabild 200 dem in horizontaler Richtung x' zweiten, dritten und folgenden n-ten Cluster C1, C2, C3 von belichteten Sensorpixeln 21 der horizontale Koordinatenwert der dritten, sechsten und allgemein $3 \cdot n$ -ten Spalte des Displays 10 zugeordnet werden. In analoger Weise verfährt man für die vertikale Richtung y'. Mit anderen Worten: die Mittelpunkte der in den Kamerabildern 200 vermessenen Cluster C1, C2, C3 bilden Stützstellen für die Bestimmung einer Koordinatentransformation vom Displaykoordinatensystem K in das Kamerakoordinatensystem K'.

Die korrespondierenden Koordinaten des Displaykoordinatensystems K für zwischen den Clustern C1, C2, C3 von belichteten Sensorpixeln 21 liegende Positionen können durch Interpolation ermittelt werden.

Auf diese Weise wird für das erste Primzahlgitter P1 mindestens näherungsweise eine Zuordnungsvorschrift oder Transformation zwischen dem Displaykoordinatensystem K und dem Kamerakoordinatensystem K' ermittelt werden. Die Genauigkeit dieser Zuordnungsvorschrift kann dadurch verbessert werden, dass nacheinander weitere Primzahlgitter P2, P3 angezeigt und die horizontalen und vertikalen Positionen der jeweils belichteten Cluster C1, C2, C3 von Sensorpixel 21 ermittelt werden. (Mit anderen Worten: für jedes der nacheinander angezeigten Primzahl gitter P1, P2, P3 wird je ein Kamerabild 200 aufgenommen und ausgewertet.) Für jedes weitere Primzahlgitter P2, P3 ergeben sich in der Interpolation der Zuordnungsvorschrift jeweils neue Stützstellen mit bekannter Zuordnung zwischen dem Displaykoordinatensystem K und dem Kamerakoordinatensystem K'.

Alternativ ist es auch möglich, dass die einzelnen, für jeweils ein Primzahlgitter P1, P2, P3 aufgenommenen Kamerabilder 200 überlagert werden, beispielsweise indem auf einen gleichen Sensorpixel 21 bezogene Werte in den Kamerabildern 200 aufsummiert werden. In dem derart kumulierten Überlagerungsbild können Cluster C1, C2, C3 in gleicher Weise ermittelt werden wie in den einzeln aufgenommenen Kamerabildern 200. Ein Vorteil dieser Ausführungsform besteht darin, dass nur ein einziges Überlagerungsbild ausgewertet werden muss, das zudem ein verbessertes Signal-Rausch-Verhältnis aufweist.

Mehrere Primzahlgitter P1 bis P3 können auch überlagert werden und bilden dann, wie in Figur 2D beispielhaft für das erste bis dritte Primzahlgitter P1 bis P3 dargestellt, einen einzigen (vierten) Positionscode P4, der als absoluter Positionscode P4 ausgebildet ist, wie nachfolgend noch genauer erklärt wird. Unter einer Überlagerung von Primzahlgittern P1 bis P3 soll hier und im Folgenden eine pixelweise (das heißt: per Anzeigeelement vorgenommene) Verknüpfung von Einzelwerten verstanden werden, beispielsweise eine logische Verknüpfung mittels AND, OR oder XOR Operator, eine arithmetische Verknüpfung durch Addition oder eine arithmetische Verknüpfung durch Addition logarithmischer Einzelwerte.

Die Ermittlung der Stützstellen für die Koordinatentransformation vom Displaykoordinatensystem K in das Kamerakoordinatensystem K' erfolgt zunächst analog zu dem anhand von Figur 2A bis 2C beschriebenen Verfahren durch Bestimmung der Mittelpunkte oder Schwerpunkte von Clustern C1, C2, C3 belichteter Sensorpixel 21, wie in **Figur 3** schematisch dargestellt.

Beispielhaft sind ein erstes Cluster C1, ein zweites Cluster C2 und ein drittes Cluster C3 in einem Kamerabild 200 dargestellt, das die Belichtung von Sensorpixeln 21 des Sensors 20 wiedergibt, die das Display 10 ausschnittsweise erfassen. Das erste Cluster C1 korrespondiert zu einem Anzeigeelement 11, 12, das im ersten Primzahlgitter P1 aktiviert wird. Das zweite Cluster C2 korrespondiert zu einem Anzeigeelement 11, 12, das im zweiten Primzahlgitter P2 aktiviert wird. Das dritte Cluster C3 korrespondiert zu einem Anzeigeelement 11, 12, das im dritten Primzahlgitter P3 aktiviert wird. Jedes Cluster C1, C2, C3 wird von einer Mehrzahl von zusammenhängenden, belichteten Sensorpixeln 21 gebildet.

Es werden die horizontalen Abstände $\Delta x_1'$, $\Delta x_2'$ und die vertikalen Abstände $\Delta y_1'$, $\Delta y_2'$ der Schwerpunkte von horizontal und vertikal benachbarten Clustern C1, C2, C3 des jeweils selben Primzahlgitters P1, P2 ermittelt. Aus den ermittelten Abständen $\Delta x_1'$, $\Delta x_2'$, $\Delta y_1'$, $\Delta y_2'$ ergibt sich die Position der Stützstelle, die dem jeweiligen Cluster C1, C2, C3 zuzuordnen ist.

Bei einem Primzahlgitter P1 bis P3 kann die Zuordnung der Position der Stützstelle beispielsweise durch Abzählen der erfassten Cluster C1, C2, C3 in horizontaler und in vertikaler Richtung x', y' erfolgen, wenn im Kamerabild 200 mindestens eine Struktur erfasst und erkennbar ist, deren Position im Displaykoordinatensystem K bekannt ist. Beispielsweise können Cluster C1, C2, C3 ausgehend von einer im Kamerabild 200 erfassten (linken oberen, linken unteren, rechten oberen und/oder rechten unteren) Ecke des Displays 10 abgezählt werden. Derartige Positionscodes P1 bis P3 sollen daher als relative Positionscodes bezeichnet werden.

Ein Vorteil des aus der Überlagerung von mehreren Primzahlgittern P1 bis P3 gebildeten vierten Positionscodes P4 besteht demgegenüber darin, dass eine eindeutige Zuordnung von Clustern C1, C2, C3 zu den Positionen der jeweiligen aktivierten (beispielsweise hell dargestellten) Anzeigeelemente 11, 12 im Displaykoordinatensystem K auch dann möglich ist, wenn nur ein Ausschnitt des Displays 10 von der Messkamera 2 erfasst ist, in dem eine solche Struktur mit bekanntem Bezug zum Displaykoordinatensystem K fehlt. Derartige Positionscodes P4 sollen als absolute Positionscodes bezeichnet werden.

In dem erfassten Ausschnitt wird zu jedem der überlagerten Primzahlgitter P1 bis P3 jeweils eine Menge von Clustern C1, C2, C3 ermittelt. Die ersten Cluster C1 des ersten Primzahlgitters P1 sind voneinander horizontal beziehungsweise vertikal in jeweils näherungsweise gleichen ersten Abständen $\Delta x_1'$, $\Delta y_1'$ angeordnet, wobei geringfügige Variationen beispielsweise durch eine Verzeichnung der Abbildung oder eine schräge (perspektivische) Anordnung der Messkamera 2 gegenüber dem Display 10 möglich sind.

Die zweiten Cluster C2 des zweiten Primzahlgitters P2 sind voneinander horizontal beziehungsweise vertikal in näherungsweise gleichen zweiten Abständen $\Delta x_2'$, $\Delta y_2'$ angeordnet. Analog sind die dritten Cluster C3 des dritten Primzahlgitters P3 horizontal beziehungsweise vertikal in einem dritten Abstand $\Delta x_3'$, $\Delta y_3'$ angeordnet.

Die Abstände verhalten sich zueinander näherungsweise wie die Primzahlen der Primzahlgitter P1, P2, P3, das heißt:

$$\frac{\Delta x_1'}{\Delta x_2'} = \frac{\Delta y_1'}{\Delta y_2'} = \frac{3}{5}, \qquad \frac{\Delta x_1'}{\Delta x_3'} = \frac{\Delta y_1'}{\Delta y_3'} = \frac{3}{7}$$

Zu jedem Cluster C1, C2, C3 können direkt (horizontal oder vertikal) und diagonal benachbarte Cluster C1, C2, C3 ermittelt werden, die jeweils ein zugeordnetes Clusterrechteck R1, R2, R3 mit einer horizontalen Kantenlänge von $\Delta x_1'$, $\Delta x_2'$ beziehungsweise $\Delta x_3'$ und mit einer horizontalen Kantenlänge von $\Delta y_1'$, $\Delta y_2'$ beziehungsweise $\Delta y_3'$ aufspannen.

Derart aufgespannte Clusterrechteck R3 des der größten Primzahl zugeordneten dritten Primzahlgitters P3 umfassen somit mindestens jeweils ein inneres Cluster X1, X2 eines der Primzahlgitter P1, P2, die einer kleineren Primzahl zugeordnet sind. Diese inneren Cluster X1, X2 sind gegenüber dem umschreibenden Clusterrechteck R3 (beispielsweise gegenüber dessen linker oberer Ecke) horizontal und vertikal versetzt, wobei dieser Versatz abhängig von der Lage des äußeren Clusterrechtecks C3 im Kamerakoordinatensystem K', und somit auch abhängig von der Lage der zugeordneten Anzeigeelemente 11, 12 im Displaykoordinatensystem K variiert.

Insbesondere wiederholt sich das Anordnungsmuster von inneren Clustern X1, X2 nur mit einer Periode (bezüglich des vertikalen / horizontalen Abstandes von Anzeigeelementen), die durch das Produkt aller Primzahlen der Primzahlgitter P1, P2, P3 bestimmt ist (vorliegend also nach 3 · 5 · 7 = 105).

Innerhalb einer solchen Periode ist aus der Anordnung der inneren Cluster X1, X2 somit eine eindeutige Ortsbestimmung sowohl für diese inneren Cluster X1, X2, als auch für die umschreibenden dritten Cluster C3 auch dann möglich, wenn das Display 10 von der Messkamera 2 nur ausschnittsweise erfasst wird, solange die Lage dieses Ausschnitts grob, das heißt: auf die Periode der überlagerten Primzahlgitter P1, P2, P3 genau angegeben ist.

Insbesondere ist es mit einem solchen absoluten Positionscode P4 möglich, großflächige Displays 10 mit einer Vielzahl von einzelnen, einander teilweise überlappenden Kamerabildern 200 zu erfassen und in diesen Kamerabildern 200 erfasste Cluster C1, C2, C3 Koordinaten im Displaykoordinatensystem K zuzuordnen.

Dabei besteht ein weiterer Vorteil dieser Ausführungsform darin, dass die Positionierung der Messkamera 2 gegenüber dem Display 10 nur so grob erfasst oder eingestellt werden muss, da deren Versatz, wenn er kleiner als die Periode der überlagerten Primzahlgitter P1 bis P3 ist, stets aus der Anordnung der inneren Cluster X1, X2 relativ zum umschreibenden dritten Cluster C3 ermittelt werden kann.

Die Überlagerung mehrerer Primzahlgitter P1 bis P3 in einem absoluten Positionscode P4 bietet darüber hinaus den Vorteil, dass besonders viele Stützstellen mit nur einer einzigen Aufnahme eines Kamerabildes 200 erfasst werden können. Dabei kann jedes Cluster C1, C2, C3 (und somit auch jede Stützstelle) eindeutig einem aktivierten Anzeigeelement 11, 12 zugeordnet werden, da die Abfolge der links beziehungsweise oberhalb eines solchen Clusters C1, C2, C3 ermittelten weiteren Cluster dessen Position eindeutig bestimmt. Insbesondere kann bei einem aus der Überlagerung mehrerer Primzahlgitter P1 bis P3 gebildeten Positionscode P4 einem Cluster C1, C2, C3 auch dann die Position des korrespondierenden aktivierten Anzeigeelements 11, 12 (relativ zum Displaykoordinatensystem K) zugeordnet werden, wenn vom Sensor 20 der Messkamera 2 nur ein Teil des Displays 10 erfasst wird.

Wenngleich Primzahlgitter P1 bis P3 und darauf basierende Positionscodes P1 bis P4 vorteilhaft, insbesondere leicht umsetzbare Verfahren zur Positionsbestimmung von Clustern C1, C2, C3 sind, so sind noch weitere Verfahren bekannt, mit denen die Zuordnung eines Clusters C1, C2, C3 zu jeweils einem aktivierten Anzeigeelement 11, 12 möglich ist und die somit zur Ermittlung einer Transformationsbeziehung zwischen dem Displaykoordinatensystem K und dem Kamerakoordinatensystem K' herangezogen werden können. Insbesondere sind auch weitere absolute Positionscodes bekannt, mit denen aus der relativen Anordnung von Clustern C1, C2, C3 die absolute Position der zugeordneten Anzeigeelemente 11, 12 im Displaykoordinatensystem K ermittelt werden kann.

Die Messkamera 2 kann gegenüber dem Display 10 unterschiedlich angeordnet (das heißt: unterschiedlich positioniert und/oder ausgerichtet) sein. Unterschiede in der Anordnung von Messkamera 2 und Display 10 werden als unterschiedliche Messpositionen MP1, MP2 bezeichnet, unabhängig davon, ob eine Lageveränderung gezielt, beispielsweise wie nachfolgend beschrieben durch Verfahren der Messkamera 2, vorgenommen wird oder sich aufgrund von Toleranzen oder zufälligen Einflüssen auf die Anordnung ergeben.

Figur 4 zeigt schematisch eine Vorrichtung zur lichttechnischen Vermessung eines Displays 10 mit einer Messkamera 2 mit einer zum Display 10 näherungsweise senkrecht ausgerichteten optischen Achse OA, die mittels einer Bewegungseinheit 4 bewegbar ist. Beispielhaft sind eine erste Messposition MP1 und eine zweite Messposition MP2 dargestellt, zwischen denen die Messkamera 2 von der Bewegungseinheit 4 bewegt werden kann.

Die Messkamera 2 und die Bewegungseinheit 4 sind dabei so eingerichtet, dass in der ersten Messposition MP1 ein erster Teilbereich 13 des Displays 10 erfasst wird und in der zweiten Messposition MP2 ein zweiter Teilbereich 14 des Displays 10 erfasst wird. Die Teilbereiche 13, 14 unterscheiden sich, können sich jedoch teilweise überlappen.

Die Messkamera 2 und die Bewegungseinheit 4 sind mit einer Steuer- und Auswerteeinheit 5 gekoppelt. Mittels der Steuer- und Auswerteeinheit 5 wird die Bewegungseinheit 4 zur Bewegung der Messkamera 2 zwischen den Messpositionen MP1, MP2 angesteuert. Ferner ist die Steuer- und Auswerteeinheit 5 zur Ansteuerung des Displays 10 eingerichtet und mit diesem verbunden.

In jeder Messposition MP1, MP2 wird durch die Steuer- und Auswerteeinheit 5 das Display 10 zur Anzeige mindestens eines Positionscodes P1 bis P4 sowie mindestens eines vorzugsweise homogenen Testbildes 100 angesteuert, das in Figur 4 nicht näher dargestellt ist und nachfolgend noch erläutert wird. Danach wird jeweils die Aufnahme eines Kamerabildes 200 ausgelöst, dass den der jeweiligen Messposition MP1, MP2 zugeordneten Teilbereich 13, 14 des Displays 10 erfasst.

Die Steuer- und Auswerteeinheit 5 wertet die in den Kameraaufnahmen erfassten Positionscodes P1 bis P4 aus und ermittelt daraus eine auf den jeweiligen Teilbereich 13, 14 bezogene Koordinatentransformation, wie anhand der Figuren 1 bis 3 bereits erläutert wurde.

Zudem wertet die Steuer- und Auswerteeinheit 5 die in den Kameraaufnahmen im jeweiligen Teilbereich 13, 14 erfassten typischerweise homogenen Testbilder 100 aus und ermittelt, unter Anwendung der aus den Positionscodes P1 bis P4 bestimmten Koordinatentransformation, einen lichttechnischen Parameter für diejenigen Anzeigeelemente 11, 12, die in dem jeweils erfassten Teilbereich 13, 14 liegen.

Für jedes dieser Anzeigeelemente 11, 12 wird dessen lichttechnische Soll-Ausgabe, beispielsweise eine Leuchtdichte oder mindestens eine Farbkoordinate eines Farbraums, aus dem Testbild 100 ermittelt. Aus dem Kamerabild 200, das in der jeweiligen Messposition MP1, MP2 von dem Testbild 100 aufgenommen wird, wird durch Anwendung der Koordinatentransformation die lichttechnische Ist-Ausgabe für jedes dieser Anzeigeelemente 11, 12 ermittelt. Indem für alle Anzeigeelemente 11, 12 das jeweilige Verhältnis der lichttechnischen Ist-Ausgabe zur Soll-Ausgabe bestimmt wird, kann die Ansteuerung der Anzeigeelemente 11, 12 eines Teilbereichs 13, 14 derart korrigiert werden, dass für ein homogenes Testbild 100 auch Homogenität der Ist-Ausgaben aller Anzeigeelemente 11, 12 des jeweiligen Teilbereichs 13, 14 erzielt wird.

Die Messpositionen MP1, MP2 werden so gewählt, dass die Teilbereiche 13, 14 die Gesamtheit aller Anzeigeelemente 11, 12 erfassen und somit für jedes Anzeigeelement 11, 12 ein lichttechnischer Parameter bestimmt wird.

Indem jedes Anzeigeelement 11, 12 in seiner individuellen Ansteuerung durch das Display 10 entsprechend dem so bestimmten lichttechnischen Parameter korrigiert wird, wird eine homogene oder nahezu homogene Verteilung dieses lichttechnischen Parameters über das gesamte Display 10 erzielt. Beispielsweise wird eine bei einem homogenen Testbild 100 für alle Anzeigeelemente 11, 12 gleiche Leuchtdichte oder Farbkoordinate erzielt.

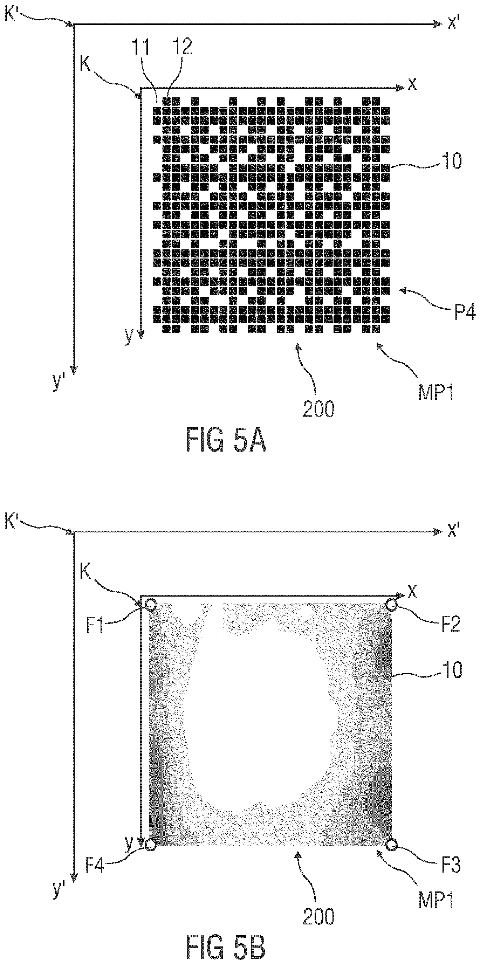

Die Figuren 5A und 5B stellen schematisch die Abbildung eines Displays 10 in einem Kamerabild 200 dar, wobei das Display 10 in Figur 5A einen Positionscode anzeigt, der hier lediglich beispielhaft als ein absoluter Positionscode P4 dargestellt ist, wie er anhand von Figur 2D als Überlagerung von Primzahlgittern P1 bis P3 bereits beschrieben wurde. Demgegenüber zeigt das Display 10 in Figur 5B ein Testbild 100 an, bei dem die Displaypixel zwar homogen (ortsunabhängig gleich) angesteuert werden, jedoch herstellungsbedingt in ihrer tatsächlich angezeigten Leuchtdichte geringfügig variieren. Das Display 10 ist gegenüber der Messkamera 2 sowohl bei der Anzeige des Positionscodes P4 als auch bei der Anzeige des Testbildes 100 in einer ersten Messposition MP1 angeordnet.

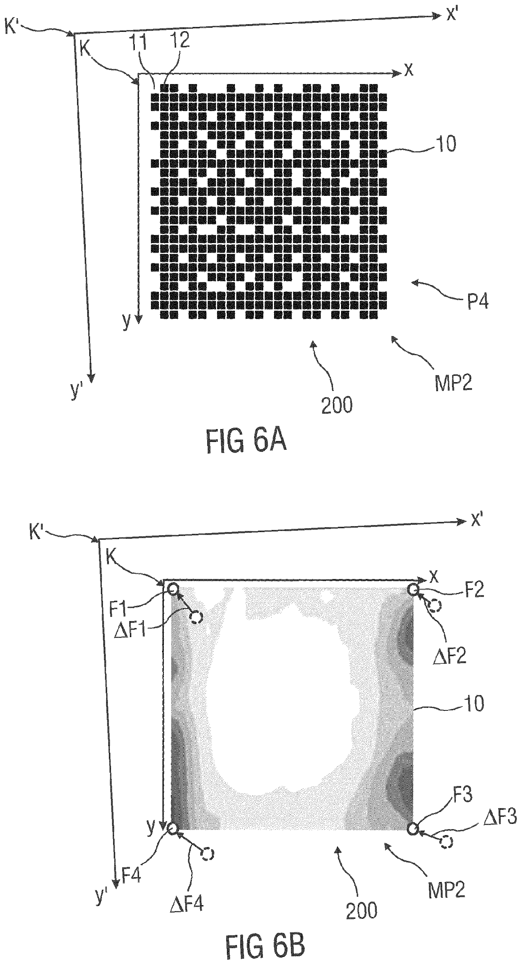

Analog zu den Figuren 5A und 5B zeigen auch die Figuren 6A und 6B schematisch die Abbildung eines Displays 10 in einem Kamerabild 200, wobei das Display 10 in Figur 6A (beispielhaft) einen absoluten Positionscode P4 und in Figur 6B ein Testbild 100 anzeigt. Das Display 10 ist gegenüber der Messkamera 2 sowohl bei der Anzeige des absoluten Positionscodes P4 als auch bei der Anzeige des Testbildes 100 in einer zweiten Messposition MP2 angeordnet.

Die in den Figuren 6A und 6B dargestellte Situation (das heißt: die zweite Messposition MP2) unterscheidet sich von der in den Figuren 5A und 5B dargestellten Situation (das heißt: von der ersten Messposition MP1) durch eine veränderte Lage des Displays 10 im Kamerabild 200, das heißt: durch eine veränderte Lage des Displaykoordinatensystems K gegenüber dem Kamerakoordinatensystem K' entsprechend dem Unterschied zwischen der ersten und der zweiten Messposition MP1, MP2.

Eine solche Lageveränderung kann dadurch hervorgerufen werden, dass bei einer nachfolgenden Messung (dargestellt in den Figuren 6A und 6B) die Messkamera 2 gegenüber dem Display 10 zur vorangegangenen Messung (dargestellt in den Figuren 5A und 5B) zwar im Wesentlichen gleich, aber nicht vollständig identisch angeordnet (positioniert und ausgerichtet) ist.

Insbesondere kann eine solche Lageveränderung auch dadurch hervorgerufen werden, dass aufeinanderfolgend baugleiche (das heißt: typgleiche), aber nicht identische Displays 10 vermessen werden, die jeweils nur näherungsweise gleich gegenüber der Messkamera 2 angeordnet werden können, da beispielsweise eine in den Figuren 5A bis 6B nicht näher dargestellte Haltevorrichtung nur eine begrenzte Positioniergenauigkeit aufweist oder weil verschiedene Exemplare von Displays 10, obwohl sie baugleich sind, kleine Abweichungen in der Anordnung der Displaypixelmatrix gegenüber einem äußeren Gehäuse aufweisen können.

Mit den anhand der vorhergehenden Figuren 2A bis 4 erklärten Verfahren ist es möglich, zunächst (anhand des in Figur 5A dargestellten Kamerabildes 200, welches das Primzahlgitters P4 in der ersten Messposition MP1 erfasst) eine erste Koordinatentransformation für die erste Messposition MP1 zu bestimmen, mit der die Koordinaten des Kamerakoordinatensystems K' in Koordinaten des Displaykoordinatensystems K überführt werden können. Mittels dieser ersten Koordinatentransformation kann nachfolgend das Testbild 100 ausgewertet werden, das vom Display 10 in der in Figur 5B dargestellten ersten Messposition MP1 angezeigt wird.

Nachfolgend kann (anhand des in Figur 6A dargestellten Kamerabildes 200, welches das Primzahlgitters P4 in der zweiten Messposition MP2 erfasst) eine zweite Koordinatentransformation für die zweite Messposition MP2 bestimmt werden, mit der die Koordinaten des Kamerakoordinatensystems K' in Koordinaten des Displaykoordinatensystems K überführt werden können. Mittels dieser zweiten Koordinatentransformation kann nun das Testbild 100 ausgewertet werden, das vom Display 10 in der in Figur 6B dargestellten zweiten Messposition MP2 angezeigt wird.

In analoger Weise kann nun für jede weitere, gegenüber der ersten Messposition MP1 geänderte Anordnung der Messkamera 2 gegenüber dem Display 10 (es sei identisch oder auch nur baugleich gegenüber dem in der ersten Messposition gemessenen) eine weitere Koordinatentransformation ermittelt und auf ein nachfolgend (bei unveränderter Anordnung gegenüber der Messkamera 2) von diesem Display 10 dargestelltes Testbild 100 angewendet werden.

Dieses Vorgehen weist jedoch den Nachteil auf, dass bei jeder Lageänderung eines Displays 10 gegenüber der Messkamera 2 erneut ein Positionscode P1 bis P4 (bevorzugt: ein absoluter Positionscode P4) angezeigt und zur Bestimmung einer auf diese geänderte Lage angepassten Koordinatentransformation ausgewertet werden muss.

Dieser Nachteil kann vermieden werden, indem die Lageveränderung des Displays 10 direkt aus der Lageveränderung des Testbildes 100 relativ zum Kamerakoordinatensystem K' ermittelt wird, wie nachfolgend erläutert wird.

Hierzu wird in einer ersten Messposition MP1 von dem Display 10 ein Positionscode P1 bis P4 angezeigt, der bevorzugt wie dargestellt als ein absoluter Positionscode P4 ausgebildet ist, und mittels der Messkamera 2 aufgenommen. Die in Figur 5A schematisch dargestellte Lage des Displaykoordinatensystems K in dem Kamerakoordinatensystem K' wird anhand des Positionscodes P4 so ermittelt, wie dies anhand der Figuren 2A bis 4 bereits erläutert wurde. Damit wird eine erste Koordinatentransformation für die Überführung von Koordinaten im Kamerakoordinatensystem K' in das Displaykoordinatensystem K bestimmt.

Anschließend wird von dem Display 10 ein Testbild 100 angezeigt, mindestens ausschnittsweise in einem Kamerabild 200 erfasst und lichttechnisch vermessen. Von Sensorpixeln 21 der Messkamera 2 erfasste lichttechnische Messwerte werden durch Anwendung der ersten Koordinatentransformation in das Displaykoordinatensystem K überführt und dadurch Displaypixeln zugeordnet.

Zusätzlich werden im Kamerabild 200 Merkmale F1 bis F4 erfasst, die örtlich eindeutigen Strukturen des Testbildes 100 zuzuordnen sind. Im vorliegend dargestellten Beispiel sind die Merkmale F1 bis F4 als Eckpunkte des Displays 10 gewählt:

- das erste Merkmal F1 ist dem am weitesten links angeordneten Displaypixel der obersten Zeile des Displays 10 zugeordnet,
- das zweite Merkmal F2 ist dem am weitesten rechts angeordneten Displaypixel der obersten Zeile des Displays 10 zugeordnet,
- das dritte Merkmal F3 ist dem am weitesten links angeordneten Displaypixel der untersten Zeile des Displays 10 zugeordnet und
- das vierte Merkmal F4 ist dem am weitesten rechts angeordneten Displaypixel der untersten Zeile des Displays 10 zugeordnet.

Es können jedoch auch andere Merkmale F1 bis F4 gewählt werden, die leicht, vorzugsweise durch automatisierte Bilderkennung in dem Kamerabild 200 gefunden und identifiziert werden können, beispielsweise Kanten oder auch lokale Bildstrukturen, die dem vom Display 10 angezeigten Testbild 100 aufgeprägt wurden.

Bevorzugt werden die Merkmale F1 bis F4 so gewählt und angeordnet, dass sie den Ausschnitt des Kamerabildes 200, in dem das zu vermessende Testbild 100 (oder ein auszuwertender Teil davon) erfasst wird, möglichst vollständig umschließen, beispielsweise als Eckpunkte oder Ränder (Kanten) des Testbildes 100.

In bestimmten Fällen ist es möglich, dass ein Display 10 durch eine mechanische Einhausung, beispielsweise einen Rahmen oder eine Blende, teilweise abgedeckt wird, wobei aufgrund von Fertigungstoleranzen der abgedeckte Teil in Lage und/oder Ausdehnung exemplarabhängig variieren kann. In derartigen Situationen ist es vorteilhaft, Merkmale F1 bis F4 so zu wählen und anzuordnen, dass sie in jedem Fall (das heißt: auch bei Berücksichtigung aller Fertigungstoleranzen) von dem Kamerabild 200 erfasst werden. Beispielsweise kann dann das Testbild 100 auf einen Bereich beschränkt werden, der sicher (das heißt: bei jedem beliebigen Displayexemplar) dargestellt und von der Messkamera 2 erfasst wird.

Die Lage der Merkmale F1 bis F4 in dem in der ersten Messposition MP1 aufgenommenen Kamerabild 200 (das heißt: die Lage relativ zum Kamerakoordinatensystem K' oder, gleichbedeutend, die Koordinaten im Kamerakoordinatensystem K', nachfolgend als Kamerakoordinaten bezeichnet) wird erfasst und gespeichert.

Bei einem nachfolgend in einer zweiten oder weiteren Messposition MP2 (das heißt: in im Wesentlichen, aber nicht vollkommen gleicher Lage gegenüber der Messkamera 2) vermessenen, baugleichen, jedoch nicht notwendigerweise exemplaridentischen Display 10 wird dieses zur Anzeige des gleichen Testbildes 100 angesteuert wie das zuvor in der ersten Messposition MP1 vermessene Display 10.

Demzufolge werden im in der zweiten Messposition MP2 aufgenommenen Kamerabild 200 dieselben Merkmale F1 bis F4 erfasst wie in der Aufnahme an der ersten Messposition MP1. Diese Merkmale F1 bis F4 liegen ortsfest (das heißt: invariant gegenüber einer Veränderung der Messposition MP1, MP2) relativ zum Displaykoordinatensystem K, jedoch in einer gegenüber der ersten Messposition MP1 veränderten Lage relativ zum Kamerakoordinatensystem K', die durch die Lageveränderung des Displays 10 gegenüber der Messkamera 2 bewirkt wird.

Jedes der Merkmale F1 bis F4 erfährt durch den Wechsel von der ersten in die zweite Messposition MP1, MP2 eine Merkmalsverschiebung ΔF1 bis ΔF4, wobei jede dieser Merkmalsverschiebungen ΔF1 bis ΔF4 als zweidimensionaler Vektor im Kamerakoordinatensystem K' zu verstehen ist, der jeweils eine horizontale Komponente (entlang der horizontalen Richtung x' des Kamerakoordinatensystems K') und eine vertikale Komponente (entlang der vertikalen Richtung y' des Kamerakoordinatensystems K') aufweist.

Eine Merkmalsverschiebung ΔF1 bis ΔF4 wird dabei als Differenz der Lage (das heißt: der dem jeweiligen Merkmal F1 bis F4 zugeordneten Kamerakoordinaten) in der zweiten Messposition MP2 gegenüber der Lage (das heißt: den demselben Merkmal F1 bis F4 zugeordneten Kamerakoordinaten) in der ersten Messposition MP1 bestimmt.

Aus der Gesamtheit der Merkmalsverschiebungen ΔF1 bis ΔF4 wird eine lagebezogene Kamerakoordinatentransformation ermittelt, die durch die folgende Eigenschaft bestimmt ist:
Wird diese lagebezogene Kamerakoordinatentransformation auf Kamerakoordinaten angewendet, auf die irgendein Punkt des Displaykoordinatensystems K in der zweiten Messposition MP2 abgebildet wird, so ergeben sich daraus in bestmöglicher Näherung diejenigen Kamerakoordinaten, auf die derselbe Punkt des Displaykoordinatensystems K in der ersten Messposition MP1 abgebildet werden würde.

Zur Bestimmung der lagebezogenen Kamerakoordinatentransformation können, abhängig von der Anzahl der

erfassten Merkmalsverschiebungen $\Delta F1$ bis $\Delta F4$ entsprechend der Anzahl der erfassten Merkmale F1 bis F4, verschiedene aus dem Stand der Technik bekannte Verfahren der Ausgleichsrechnung angewendet werden.

Beispielsweise kann eine lagebezogene Kamerakoordinatentransformation als reine Translation (das heißt: als reine Verschiebung entlang der horizontalen und vertikalen Richtung x', y') aus einer einzigen Merkmalsverschiebungen $\Delta F1$ bis $\Delta F4$ durch Lösung eines linearen Gleichungssystems bestimmt werden. Vorteilhafter ist es jedoch, eine solche reine Translation aus einer Mehrzahl von Merkmalsverschiebungen $\Delta F1$ bis $\Delta F4$ durch lineare Ausgleichsrechnung, das heißt: Lösung eines Quadratmittelproblems zu bestimmen, durch die der mittlere quadratische Fehler minimiert wird, welcher der mittleren quadratischen Abweichung der durch Anwendung der lagebezogenen Kamerakoordinatentransformation ermittelten näherungsweisen Merkmalsverschiebungen $\widetilde{\Delta F1}$ bis $\widetilde{\Delta F4}$ gegenüber den tatsächlich erfassten Merkmalsverschiebungen $\Delta F1$ bis $\Delta F4$ entspricht.

In zu einer reinen Verschiebung analoger Weise können lagebezogene Kamerakoordinatentransformationen als Überlagerung (das heißt: aufeinanderfolgende Ausführung) von Rotation und Translation oder als allgemeine affine Transformation bestimmt werden.

Danach können beliebige, in der zweiten Messposition MP2 bestimmte Kamerakoordinaten durch Anwendung dieser lagebezogenen Kamerakoordinatentransformation in korrespondierende Kamerakoordinaten für die erste Messposition MP1 übertragen werden, auf welche danach die Koordinatentransformation in das Displaykoordinatensystem K angewendet wird, die anhand des in der ersten Messposition erfassten (mindestens einen) absoluten Positionscodes P4 bestimmt wurde.

Bevorzugt sind die lagebezogene Koordinatentransformation und die Koordinatentransformation in das Displaykoordinatensystem K lineare Transformationen und können somit in einer einzigen, ebenfalls linearen Gesamt-Koordinatentransformation zusammengefasst werden, die schneller und effizienter ausgeführt werden kann.

In analoger Weise können auch lagebezogene Koordinatentransformationen für alle weiteren Messpositionen MP2 bestimmt werden, solange das vermessene Display 10 baugleich zu dem in der ersten Messposition MP1 vermessenen Display 10 ist und zur Anzeige eines identischen Testbildes 100 angesteuert wird.

Indem die Notwendigkeit entfällt, für jede verschiedene Messposition MP1, MP2 anhand jeweils mindestens eines Positionscodes P1 bis P4 eine besondere, auf die jeweilige Messposition MP1, MP2 angepasste Koordinatentransformation in das Displaykoordinatensystem K zu ermitteln, kann sowohl der Messaufwand (für die Darstellung des jeweils mindestens einen Positionscodes P1 bis P4 auf dem Display 10) als auch der Rechenaufwand (für die Ermittlung von zugeordneten Positionen aus dem jeweils aufgenommenen Kamerabild 200) reduziert werden. Der Aufwand für die Lagebestimmung der Merkmale F1 bis F4 und die anschließende Ermittlung der lagebezogenen Koordinatentransformation ist demgegenüber sehr gering.

Alternativ kann auch eine inverse lagebezogene Koordinatentransformation bestimmt und ausgeführt werden, mit der Koordinaten des Displaykoordinatensystems K abhängig von der Messposition MP1, MP2 in Koordinaten des Kamerakoordinatensystems K' übertragen werden. Nachteilig an dieser Ausführungsform kann eine möglicherweise erforderliche Interpolation der im Kamerakoordinatensystem K' bestimmten Ortsverteilung des mindestens einen lichttechnischen Parameters sein. Eine solche Interpolation wird dann erforderlich, wenn Koordinaten eines Displaypixels auf Kamerakoordinaten abgebildet werden, die zwischen zwei (oder mehr) Sensorpixeln 21 liegen. Dadurch wird die Genauigkeit des dem jeweiligen Displaypixel zugeordneten lichttechnischen Parameters herabgesetzt.

**BEZUGSZEICHENLISTE**

| | |
|---|---|
| 10 | Display |
| 11, 12 | erstes, zweites Anzeigeelement |
| 13, 14 | erster, zweiter Teilbereich |
| 100 | Testbild |
| 2 | Messkamera |
| 20 | Sensor |
| 200 | Kamerabild |
| 21 | Sensorpixel |
| 3 | Objektiv |
| 4 | Bewegungseinheit |
| 5 | Steuer- und Auswerteeinheit |

| | |
|---|---|
| C1, C2, C3 | erstes, zweites, drittes Cluster |
| F1 bis F4 | erstes bis viertes Merkmal |
| $\Delta$ F1 bis $\Delta$F4 | erste bis vierte Merkmalsverschiebung |

K      Displaykoordinatensystem
K'     Kamerakoordinatensystem
MP1, MP2     erste, zweite Messposition
OA     optische Achse
P1 bis P3     erstes bis drittes Primzahlgitter, relativer Positionscode
P4     absoluter Positionscode
R1 bis R3     erstes bis drittes Clusterrechteck
x, x'     horizontale Richtung

$\Delta x'_1$ , $\Delta x'_2$ , $\Delta x'_3$     erster, zweiter, dritter horizontaler Abstand

X1, X2     erstes, zweites inneres Cluster
y, y'     vertikale Richtung

$\Delta y'_1$ , $\Delta y'_2$ , $\Delta y'_3$     erster, zweiter, dritter vertikaler Abstand

**Patentansprüche**

1. Verfahren zur lichttechnischen Vermessung eines Displays (10) mit in einem Displaykoordinatensystem (K) angeordneten Anzeigeelementen (11, 12), wobei das Display (10) zur Anzeige mindestens eines Testbildes (100) angesteuert und mit einer Messkamera (2) mit in einem Kamerakoordinatensystem (K') angeordneten Sensorpixeln (21) mindestens ausschnittsweise in mindestens einem Kamerabild (200) erfasst wird, **dadurch gekennzeichnet, dass** in mindestens einer ersten Messposition (MP1) des Displays (10) gegenüber der Messkamera (2)

   - das Display (10) zur Anzeige mindestens eines absoluten Positionscodes (P4) angesteuert wird, der zur Positionsbestimmung mindestens eines Anzeigeelements (11, 12) relativ zum Displaykoordinatensystem (K) eingerichtet ist, wobei
   - das Display (10) während der Anzeige des mindestens einen absoluten Positionscodes (P4) von der Messkamera (2) mindestens ausschnittsweise aufgenommen wird und
   - anhand des mindestens einen absoluten Positionscodes (P4) mindestens einem Anzeigeelement (11, 12) dessen Position im Displaykoordinatensystem (K) und die Position seiner Abbildung im Kamerakoordinatensystem (K') zugeordnet wird,
   - aus den zugeordneten Positionen eine Koordinatentransformation zur Transformation von Koordinaten des Kamerakoordinatensystems (K') in Koordinaten des Displaykoordinatensystems (K) ermittelt wird, und
   - für mindestens ein Anzeigeelement (11, 12) mindestens ein lichttechnischer Parameter ermittelt wird, indem die bei der Darstellung des mindestens einen Testbildes (100) von den Sensorpixeln (21) erfassten Messwerte mittels der Koordinatentransformation in das Displaykoordinatensystem (K) überführt werden.

2. Verfahren nach Anspruch 1, **dadurch gekennzeichnet, dass** sequenziell Teilbereiche (13, 14) des Displays (10) von der Messkamera (2) aufgenommen werden, während das Display (10) zur Anzeige mindestens eines Testbildes (100) und zur Anzeige mindestens eines absoluten Positionscodes (P4) angesteuert wird, der zur Positionsbestimmung mindestens eines Anzeigeelements (11, 12) relativ zum Displaykoordinatensystem (K) anhand eines dieses Anzeigeelement (11, 12) umfassenden Teilbereiches (13, 14) eingerichtet ist, und für jeden Teilbereich (13, 14) jeweils eine Koordinatentransformation ermittelt und auf das in dem jeweiligen Teilbereich (13, 14) von der Messkamera (2) erfasste Testbild (100) angewendet wird.

3. Verfahren nach Anspruch 2, **dadurch gekennzeichnet, dass** die Gesamtheit der Teilbereiche (13, 14) das Display (10) vollständig überdeckt.

4. Verfahren nach einem der vorhergehenden Ansprüche, **dadurch gekennzeichnet, dass** der mindestens eine absolute Positionscode (P4) durch Überlagerung einer Mehrzahl von Primzahlgittern (P1 bis P3) gebildet wird.

5. Verfahren nach einem der vorhergehenden Ansprüche, **dadurch gekennzeichnet, dass** mindestens eine Koordinatentransformation durch stückweise lineare Interpolation zwischen Stützstellen gebildet wird, welche jeweils als Position der Abbildung eines Anzeigeelements (11, 12) im Kamerakoordinatensystem (K') ermittelt und anhand des mindestens einen absoluten Positionscodes (P4) einer Position dieses Anzeigeelements (11, 12) im Displaykoordinatensystem (K) zugeordnet werden.

6. Verfahren nach einem der Ansprüche 1 bis 4, **dadurch gekennzeichnet, dass** mindestens eine Koordinatentransformation durch Ausgleichsrechnung von Stützstellen gebildet wird, welche jeweils als Position der Abbildung eines Anzeigeelements (11, 12) im Kamerakoordinatensystem (K') ermittelt und anhand des mindestens einen absoluten Positionscodes (P4) einer Position dieses Anzeigeelements (11, 12) im Displaykoordinatensystem (K) zugeordnet werden.

7. Verfahren nach einem der vorhergehenden Ansprüche, **dadurch gekennzeichnet, dass** in mindestens einer weiteren Messposition (MP2) gegenüber der Messkamera (2)

   - dasselbe oder ein baugleiches weiteres Display (10) zur Anzeige eines Testbildes (100) angesteuert und währenddessen mindestens ausschnittsweise von der Messkamera (2) in einem Kamerabild (200) erfasst wird,
   - wobei das in der ersten Messposition (MP1) und das in der weiteren Messposition (MP2) dargestellte Testbild (100) in dem von der Messkamera (2) jeweils erfassten Ausschnitt mindestens ein gleiches, bezogen auf das jeweilige Displaykoordinatensystem (K) gleich angeordnetes Merkmal (F1 bis F4) aufweist,
   - wobei die Lage der Merkmale (F1 bis F4) jeweils bezogen auf das Kamerakoordinatensystem (K') in der ersten und in der weiteren Messposition (MP1, MP2) ermittelt und daraus für jedes Merkmal (F1 bis F4) eine Merkmalsverschiebung ($\Delta$F1 bis $\Delta$F4) bestimmt wird,
   - aus der Gesamtheit der Merkmalsverschiebungen ($\Delta$F1 bis $\Delta$F4) eine lagebezogene Koordinatentransformation bestimmt wird, die die Veränderung der Lage und Ausrichtung des Kamerakoordinatensystems (K') bezogen auf das Displaykoordinatensystem (K) in der weiteren Messposition (MP2) gegenüber der Lage und Ausrichtung des Kamerakoordinatensystems (K') bezogen auf das Displaykoordinatensystem (K) in der ersten Messposition (MP1) beschreibt,
   - die lagebezogene Koordinatentransformation auf das in der weiteren Messposition (MP2) erfasste Kamerabild (200) angewendet wird,
   - auf das derart transformierte Kamerabild (200) die in der ersten Messposition (MP1) ermittelte Koordinatentransformation zur Transformation von Koordinaten des Kamerakoordinatensystems (K') in Koordinaten des Displaykoordinatensystems (K) angewendet wird und
   - für mindestens ein Anzeigeelement (11, 12) mindestens ein lichttechnischer Parameter ermittelt wird.

8. Verfahren nach Anspruch 7, **dadurch gekennzeichnet, dass** als Merkmal (F1 bis F4) mindestens ein Eckpunkt eines Testbildes (100) mit rechteckigem Umfang gewählt wird.

9. Verfahren nach Anspruch 7 oder 8, **dadurch gekennzeichnet, dass** eine affine lagebezogene Koordinatentransformation an die Merkmalsverschiebungen ($\Delta$F1 bis $\Delta$F4) von bis zu drei Merkmalen (F1 bis F4) angepasst wird.

10. Verfahren nach Anspruch 7 oder 8, **dadurch gekennzeichnet, dass** eine affine lagebezogene Koordinatentransformation durch lineare Ausgleichsrechnung anhand der Merkmalsverschiebungen ($\Delta$F1 bis $\Delta$F4) von mindestens vier Merkmalen (F1 bis F4) bestimmt wird.

11. Verfahren zur Ansteuerung eines Displays (10), **dadurch gekennzeichnet, dass** in einem Kalibrationsschritt jeweils ein Istwert eines lichttechnischen Parameters für mindestens ein Anzeigeelement (11, 12) mit einem Verfahren nach einem der vorhergehenden Ansprüche ermittelt und mit einem Sollwert verglichen wird und eine Korrektur der Ansteuerung des mindestens einen Anzeigeelements (11, 12) derart ermittelt wird, dass der Istwert besser mit dem Sollwert übereinstimmt.

12. Verfahren nach Anspruch 11, **dadurch gekennzeichnet, dass** in dem Kalibrationsschritt jeweils ein Istwert eines lichttechnischen Parameters für eine Mehrzahl von Anzeigeelementen (11, 12) ermittelt wird und die Istwerte gegeneinander verglichen werden und die Ansteuerung des Displays (10) derart verändert wird, dass Unterschiede zwischen Istwerten der Mehrzahl von Anzeigeelementen (11, 12) verringert werden.

13. Vorrichtung zur lichttechnischen Vermessung eines Displays (10) umfassend eine Messkamera (2) und eine Steuer- und Auswerteeinheit (5), **dadurch gekennzeichnet, dass** die Steuer- und Auswerteeinheit (5) mit der Messkamera (2) zur Auslösung und Übertragung von Kamerabildern (200) gekoppelt und zur Durchführung eines Verfahrens nach einem der Ansprüche 1 bis 6 eingerichtet ist.

14. Vorrichtung nach Anspruch 13 **gekennzeichnet durch** eine Bewegungseinheit (4), die zur Bewegung der Messkamera (2) zwischen Messpositionen (MP1, MP2) eingerichtet ist, in denen ein näherungsweise senkrecht zur optischen Achse (OA) der Messkamera (2) angeordnetes Display (10) in jeweils einem Teilbereich (13, 14) erfassbar ist.

EP 4 102 492 A1

**FIG 1**
Stand der Technik

FIG 2A

FIG 2B

FIG 2C

FIG 2D

FIG 3

FIG 4

FIG 5A

FIG 5B

FIG 6A

FIG 6B

Europäisches
Patentamt

European
Patent Office

Office européen
des brevets

# EUROPÄISCHER RECHERCHENBERICHT

**Nummer der Anmeldung**

**EP 22 16 1241**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X<br>A | US 2020/134845 A1 (WANG YUNQI [CN] ET AL)<br>30. April 2020 (2020-04-30)<br>* Absätze [0066] - [0129]; Abbildungen<br>1-4,7,8 *<br>----- | 1,5,6,<br>11-14<br>2-4,7-10 | INV.<br>G09G3/20<br>G02F1/13<br>G06T7/00<br>G06T5/00 |
| A | US 2014/232880 A1 (MURASE HIROSHI [JP] ET<br>AL) 21. August 2014 (2014-08-21)<br>* Absätze [0069] - [0117]; Abbildungen 1-7<br>*<br>----- | 1-14 | G06T7/30<br>G06T7/32<br>G06T7/33<br>G06T7/73<br>G06T7/80 |
| A | JP 4 907725 B2 (SHARP KK)<br>4. April 2012 (2012-04-04)<br>* Absätze [0022] - [0136]; Abbildungen<br>1-27 *<br>----- | 1-14 | |
| A | US 2005/149865 A1 (WANG JIAN [CN] ET AL)<br>7. Juli 2005 (2005-07-07)<br>* Absätze [0033], [0043] - [0059];<br>Abbildungen 2-10 *<br>----- | 1-14 | |
| A | US 2012/062621 A1 (MIYAHARA KOJI [JP] ET<br>AL) 15. März 2012 (2012-03-15)<br>* Absätze [0032] - [0138]; Abbildungen<br>1-19 *<br>----- | 1-14 | RECHERCHIERTE SACHGEBIETE (IPC)<br><br>G09G<br>G02F<br>G06T |

Der vorliegende Recherchenbericht wurde für alle Patentansprüche erstellt

| Recherchenort | Abschlußdatum der Recherche | Prüfer |
|---|---|---|
| München | 28. Juli 2022 | Demin, Stefan |

**EP 4 102 492 A1**

**ANHANG ZUM EUROPÄISCHEN RECHERCHENBERICHT
ÜBER DIE EUROPÄISCHE PATENTANMELDUNG NR.**

EP 22 16 1241

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-07-2022

| Im Recherchenbericht angeführtes Patentdokument | Datum der Veröffentlichung | Mitglied(er) der Patentfamilie | Datum der Veröffentlichung |
|---|---|---|---|
| US 2020134845 A1 | 30-04-2020 | CN 109360203 A | 19-02-2019 |
| | | US 2020134845 A1 | 30-04-2020 |
| US 2014232880 A1 | 21-08-2014 | CN 105103541 A | 25-11-2015 |
| | | JP 6278706 B2 | 14-02-2018 |
| | | JP WO2014128821 A1 | 02-02-2017 |
| | | US 2014232880 A1 | 21-08-2014 |
| | | US 2014375824 A1 | 25-12-2014 |
| | | WO 2014128821 A1 | 28-08-2014 |
| JP 4907725 B2 | 04-04-2012 | CN 102202226 A | 28-09-2011 |
| | | JP 4907725 B2 | 04-04-2012 |
| | | JP 2011198179 A | 06-10-2011 |
| US 2005149865 A1 | 07-07-2005 | AU 2004242472 A1 | 21-07-2005 |
| | | BR PI0500009 A | 06-09-2005 |
| | | CA 2491586 A1 | 06-07-2005 |
| | | CN 1637775 A | 13-07-2005 |
| | | EP 1553485 A2 | 13-07-2005 |
| | | JP 2005228302 A | 25-08-2005 |
| | | KR 20050072699 A | 12-07-2005 |
| | | MX PA05000367 A | 19-08-2005 |
| | | RU 2360303 C2 | 27-06-2009 |
| | | TW 200525455 A | 01-08-2005 |
| | | US 2005149865 A1 | 07-07-2005 |
| | | ZA 200410391 B | 28-05-2008 |
| US 2012062621 A1 | 15-03-2012 | CN 102473396 A | 23-05-2012 |
| | | EP 2472504 A1 | 04-07-2012 |
| | | HK 1166663 A1 | 02-11-2012 |
| | | JP 5300981 B2 | 25-09-2013 |
| | | JP WO2011024232 A1 | 24-01-2013 |
| | | US 2012062621 A1 | 15-03-2012 |
| | | WO 2011024232 A1 | 03-03-2011 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 9135851 B2
- US 20200211502 A1
- WO 2004070693 A2
- WO 2015104384 A1
- US 5650844 A
- WO 2009095449 A2